(19) Europäisches Patentamt
European Patent Office
Office européen des brevets

(11) **EP 4 414 338 A1**

(12) **EUROPÄISCHE PATENTANMELDUNG**

(43) Veröffentlichungstag:
**14.08.2024  Patentblatt 2024/33**

(51) Internationale Patentklassifikation (IPC):
***C04B 28/00*** *(2006.01)*    ***C04B 111/10*** *(2006.01)*

(21) Anmeldenummer: 23217750.1

(22) Anmeldetag: **18.12.2023**

(52) Gemeinsame Patentklassifikation (CPC):
(C-Sets verfügbar)
**C04B 28/006;** C04B 2111/1037    (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **27.12.2022  DE 102022134848**

(71) Anmelder: **braun-steine GmbH
73340 Amstetten (DE)**

(72) Erfinder: **Brunkhorst, Andreas
71642 Ludwigsburg (DE)**

(74) Vertreter: **RPK Patentanwälte
Reinhardt und Kaufmann
Partnerschaft mbB
Gaisburgstraße 21
70182 Stuttgart (DE)**

(54) **ZEMENTFREI AUSHÄRTENDE MISCHUNG, FORMBESTÄNDIGER ZEMENTFREI AUSGEHÄRTETER KÖRPER, VERFAHREN ZUR HERSTELLUNG EINER SOLCHEN MISCHUNG, VERFAHREN ZUR HERSTELLUNG EINES SOLCHEN KÖRPERS**

(57)    Die Erfindung betrifft eine zementfrei aushärtende Mischung (100), welche eine Zuschlagskörnung (110), ein Zusatzmittelgemisch (120) und Wasser (130) umfasst. Die Zuschlagskörnung umfasst einen alkalisch reaktiven Anteil und einen alkalisch nicht reaktiven Anteil. Die Zuschlagskörnung (110) liegt in der Mischung (100) mit einem Gewichtsanteil von maximal 90 Gewichts % vor und umfasst zumindest ein recycliertes, anorganisches, körniges Material, welches den alkalisch reaktiven Anteil in Form von zerkleinertem Beton aufweist. Das Zusatzmittelgemisch (120) umfasst einen alkalischen Anteil (122) mit einem Feststoffanteil in der Mischung (100) mit wenigstens 1,5 Gewichts %. Der alkalische Anteil (122) umfasst ein Alkalisilikat (128), welches reaktives Silizium für Bindungen zur Verfügung stellt, sowie ein Erdalkalimetallhydroxid (124) und/oder wenigstens Alkalimetallhydroxid (126), welche den alkalisch reaktiven Anteil der Zuschlagskörnung (110) mit Erdalkalimetallhydroxiden (124) und/oder Alkalimetallhydroxiden (126) anreichern.

Ferner umfasst die Erfindung ein Herstellverfahren für die Mischung sowie einen Körper (200), der aus einer zementfrei aushärtenden Mischung (100) gebildet ist.

Fig. 1

(52) Gemeinsame Patentklassifikation (CPC): (Forts.)

C-Sets
**C04B 28/006, C04B 12/04, C04B 14/06,
C04B 14/16, C04B 14/28, C04B 14/062,
C04B 14/106, C04B 14/108, C04B 18/08,
C04B 18/167, C04B 20/008, C04B 22/062,
C04B 22/064, C04B 2103/32, C04B 2103/58,
C04B 2103/0088**

**Beschreibung**

Stand der Technik

Die Erfindung betrifft eine zementfrei aushärtende Mischung, einen formbeständigen, zementfrei ausgehärteten Körper, ein Verfahren zur Herstellung einer solchen zementfrei aushärtenden Mischung und ein Verfahren zur Herstellung eines solchen formbeständigen zementfrei ausgehärteten Körpers.

Aushärtende Mischungen, insbesondere Betonmischungen, Körper aus diesen Mischungen und entsprechende Herstellungsverfahren mit einem Bindemittel, insbesondere Zement, Wasser, einem Zuschlag, einem Zusatzmittel und einem Zusatzstoff sind aus dem Stand der Technik bekannt.

Des Weiteren sind sogenannte bewehrte Betone bekannt. Die Bewehrung geht hierbei einen Verbund mit dem ausgehärteten Körper ein, um dessen Tragwirkung zu verbessern.

Des Weiteren sind so genannte Recyclingbetone bekannt, welche zumindest ein Bindemittel, Wasser und einen Zuschlag umfassen, wobei der Zuschlag recyclierte Gesteinskörnung umfasst. Des Weiteren sind Kompositzemente nach DIN EN 197-1 bekannt, welche neben 5 Gewichts % bis 100 Gewichts % hydraulisch aushärtenden Zementklinker, weitere als Hauptbestandteile enthaltene, puzzolanische oder andere hydraulisch oder latent hydraulische Bindemittel aufweisen. Ebenfalls sind Mischungen bekannt, die Zement zumindest teilweise durch puzzolanische oder andere hydraulische oder latent hydraulische Bindemittel ersetzten.

Beispielsweise ist aus der DE 102010027325 A1 eine Baustofftrockenmischung, insbesondere eine Bindemitteltrockenmischung bekannt, welche mindestens einen Kalkträger, insbesondere ausgewählt aus Calciumoxid, vorzugsweise in Form von Branntkalk (CaO), und/oder Calciumhydroxid, vorzugsweise in Form von Löschkalk ($Ca(OH)_2$), zusammen mit einer Kombination von Trass einerseits und Kaolin und/oder Metakaolin andererseits enthält.

Des Weiteren ist aus der WO 002003078349 A1 ein geopolymeres Bindemittel auf Flugaschenbasis, das zur Produktion von Breien, Mörtel und Betonen genutzt werden kann, bekannt. Das Bindemittel enthält 70 bis 94 Gewichtsprozent Kraftwerkflugasche und 5 bis 15 Gewichtsprozent eines alkalischen Aktivators. Der alkalische Aktivator umfasst ein Gemisch vom alkalischen Hydroxid und alkalischen Silikat, zum Beispiel Wasserglas. Das Bindemittel umfasst außerdem 1 bis 15 Gewichtsprozent einer kalkhaltigen Verbindung, beispielsweise mit Calciumhydroxid ($Ca(OH)_2$. Eine solche kalkhaltige Verbindung kann zum Beispiel, gemahlener Kalkstein oder Dolomitkalkstein, Abfallgipsstein aus chemischen Produktionen, Abfallgipsstein aus Schwefelabscheidensverfahren, wiederaufbereitetes Zementmaterial aus Beton sein.

Offenbarung der Erfindung

Bei der Herstellung von Zement entstehen große Mengen Kohlenstoffdioxid. Latenthydraulische Bindemittel, hydraulische Bindemittel und/oder puzzolanische Bindemittel, welche Zement zumindest teilweise ersetzen können, sind endliche Ressourcen, welche in Zukunft nicht in beliebiger Menge zur Verfügung stehen werden. Zudem können auch klassische Zuschläge in Betonmischungen, wie beispielsweise Sand und Kies, ebenfalls knapp werden.

Daher ist die Aufgabe der Erfindung die Bereitstellung einer zementfrei aushärtenden Mischung, welche ressourcenschonend ist.

Des Weiteren ist die Aufgabe der Erfindung die Bereitstellung eines zementfreien, formbeständig ausgehärteten Körpers mit ressourcenschonender Zusammensetzung.

Eine weitere Aufgabe besteht in der Schaffung eines ressourcenschonenden Verfahrens zur Herstellung einer derartigen Mischung.

Eine weitere Aufgabe besteht in der Schaffung eines ressourcenschonenden Verfahrens zur Herstellung eines derartigen Körpers.

Die Aufgaben werden durch die Merkmale der unabhängigen Ansprüche gelöst. Günstige Ausgestaltungen und Vorteile der Erfindung ergeben sich aus den weiteren Ansprüchen, den Figuren und der Beschreibung.

Es folgen Begriffsdefinitionen, welche für die erfindungsgemäße zementfrei aushärtende Mischung, den erfindungsgemäßen formbeständigen, zementfrei ausgehärteten Körper, das erfindungsgemäße Verfahren zur Herstellung einer solchen zementfrei aushärtenden Mischung und das erfindungsgemäße Verfahren zur Herstellung eines solchen formbeständigen zementfrei ausgehärteten Körpers gelten.

Zementfrei aushärtend soll im Folgenden bedeuten, dass zur Erzeugung von Bindungen und zum Erzeugen von Bindungskräften in der Mischung und/oder im Körper kein reaktiver Zement zugesetzt wird. Dies soll nicht ausschließen, dass zur Wiederverwertung, gegebenenfalls zerbrochene oder zermahlene Betonsteine und Brechsande zugegeben werden können, die ursprünglich mit Zement hergestellt wurden. Dies schließt auch nicht aus, dass zermahlene Betonsteine oder deren Bestandteile mit anderen Anteilen der Mischung oder der Atmosphäre reagieren können.

Unter aushärtend wird im Folgenden verstanden, dass in der Mischung zumindest Anteile der Zuschlagskörnung in einer geeigneten Art und Weise abbinden. Dadurch verkleben abbindende bzw. reaktive Anteile der Mischung und inaktive bzw. nicht reaktive Anteile der Mischung miteinander. Dadurch wird die Mischung hart und fest. Neben dem Abbinden ist auch ein Erstarren von Anteilen der Mischung vorstellbar.

Unter einer Zuschlagskörnung wird im Folgenden ein körniges Material verstanden, welches mit Wasser und Zement für die Herstellung von Beton geeignet ist und hierfür verwendet werden kann. Der Begriff Zuschlagskörnung ist auch unter den Begriffen Zuschlag oder Gesteinskörnung bekannt.

Zuschlagskörnungen können entsprechend ihrer Herkunft, dem Gefüge und der Kornrohdichte eingeteilt werden. Die Zuschlagskörnung kann natürlich, industriell hergestellt oder recycliert sein. Für die erfindungsgemäße Mischung umfasst die Zuschlagskörnung einen Anteil recyclierten Materials. Generell sind die Zuschlagskörner bzw. Gesteinskörner so fest, dass sie bei der Herstellung von Beton übliche Druckfestigkeitsklassen aufweisen, wie sie von mit Zement hergestelltem Beton bekannt sind.

Unter einem Zusatzmittel wird im Folgenden ein Alkalisilikat und ein Erdalkalimetallhydroxid und ein Alkalimetallhydroxid verstanden. Des Weiteren kann unter einem Zusatzmittel ein Betonverflüssiger und/oder ein Fließmittel und/oder ein Luftporenbilder und/oder Dichtungsmittel und/oder ein Verzögerer und/oder ein Beschleuniger und/oder eine Einpresshilfe und/oder ein Stabilisierer verstanden werden.

Unter einer Zusatzmittelmischung werden im Folgenden ein oder mehrere Zusatzmittel verstanden, welche in die erfindungsgemäße Mischung eingegeben werden. Diese müssen nicht zwingend miteinander vermischt werden, bevor diese in die erfindungsgemäße Mischung eingegeben werden. Das Wort Zusatzmittelmischung soll lediglich ausdrücken, dass mehr als ein Zusatzmittel in der erfindungsgemäßen Mischung vorhanden sein kann, wobei mehrere Zusatzmittel in unterschiedlichen oder gleichen Mengenverhältnissen zugegeben werden können.

Bei den Zusatzstoffen werden gemäß DIN EN 206-1 und DIN 1045-2 im Folgenden zwei Typen unterschieden: Zu Typ I gehören inaktive bzw. inerte Zusatzstoffe, beispielsweise Füller zum Verdichten. Zu Typ II gehören aktive Zusatzstoffe, beispielsweise puzzolanische oder latent-hydraulische Zusatzstoffe. Typ-zwei-Zusatzstoffe können einem Bindemittelgehalt angerechnet werden. Die Zusatzstoffe des Typs II können zum Aushärten der Mischung beitragen. In der erfindungsgemäßen Mischung sind Zusatzstoffe des Typs II optional und werden nicht zwingend zum Aushärten der Mischung benötigt. Des Weiteren sind in der erfindungsgemäßen Mischung Zusatzstoffe des Typs I optional und können zusätzlich eingegeben werden, um weitere Eigenschaften des gebildeten Körpers, wie eine Dichte und/oder Kantenstabilität, zu verbessern.

Unter einer Zusatzstoffmischung werden im Folgenden ein oder mehre Zusatzstoffe verstanden, welche in die erfindungsgemäße Mischung eingegeben werden. Diese müssen nicht zwingend miteinander vermischt werden, bevor diese in die erfindungsgemäße Mischung eingegeben werden.

Das Wort "Zusatzstoffmischung" soll lediglich ausdrücken, dass mehr als ein Zusatzstoff in der Mischung vorhanden sein kann, wobei mehrere Zusatzstoffe in unterschiedlichen oder gleichen Mengenverhältnissen zugegeben werden können.

Unter klassischen Bindemitteln werden im Folgenden hydraulische Bindemittel, beispielweise Zement, puzzolanische Bindemittel und/oder latent hydraulische Bindemittel verstanden.

Bei klassischem Beton ist die Reaktion der silikatischen Klinkerphasen für das Erstarren und die Festigkeitsentwicklung von Portlandzementen entscheidend. Bei der Hydratation von Alit und Belit entstehen Calciumsilikathydrate mit variabler, nichtstöchiometrischer Zusammensetzung (C-S-H-Phasen) und Calciumhydroxid ($Ca(OH)_2$).

Wesentliche wasserhaltige Hydratphasen sind: Calciumsilikathydrat (CSH), Tetracalciumaluminathydrat, Calciumaluminatsulfathydrate in Form von Trisulfat und Monosulfat.

In der erfindungsgemäßen Mischung können reaktive Anteile des als Zuschlag zugegebenen Recyclingsbetons bzw. recyclierten Betons und optional reaktive Anteile der puzzolanischen Bindemittel mit Calciumhydroxid ($Ca(OH)_2$) in Wasser reagieren. Bei der Reaktion der puzzolanischen Bindemittel mit Calciumhydroxid ($Ca(OH)_2$) entstehen puzzolanische Bindungen beim Abbinden von frischem Beton.

Die allgemeinen Reaktionsgleichungen lauten:

$$x\ Ca(OH)_2 + y\ SiO_2 + z\ H_2O \rightarrow x\ CaO \bullet y\ SiO_2 \bullet (x + z)H_2O$$

$$w\ Ca(OH)_2 + y\ AlO_3 + z\ H_2O \rightarrow w\ CaO \bullet y\ Al_2O_3 \bullet (w + z)H_2O$$

Die Reaktion läuft in wässriger Umgebung ab. Der pH-Wert regelt die Reaktion. Ist das Calciumhydroxid ($Ca(OH)_2$) zu stark verdünnt, wird die notwendige Basizität nicht erreicht, um Siliziumoxid ($SiO_2$) und Aluminiumoxid ($Al_2O_3$) der Puzzolane anzulösen.

Eine grundlegende Eigenschaft der Puzzolane ist somit ein mehr oder minder hoher Bedarf an Calciumhydroxid zur Phasenausbildung. Da der Gehalt an Calciumhydroxid den pH-Wert der so genannten Porenlösung, die in Poren des Betons enthalten ist, und somit den Bewehrungsschutz im alkalischen Milieu des Betons bestimmt, ist der Maximalgehalt des Betonzusatzstoffs normativ geregelt.

Es wird eine zementfrei aushärtende Mischung vorgeschlagen, welche eine Zuschlagskörnung, ein Zusatzmittelgemisch und Wasser umfasst. Die Zuschlagskörnung umfasst einen alkalisch reaktiven Anteil und einen alkalisch nicht reaktiven Anteil. Die Zuschlagskörnung liegt in der Mischung mit einem Gewichtsanteil von maximal 90 Gewichts % vor und umfasst zumindest ein recycliertes, anorganisches, körniges Material, welches den alkalisch reaktiven Anteil in Form von zerkleinertem, ausgehärtetem Beton, aufweist. Das Zusatzmittelgemisch umfasst zumindest einen alkalischen Anteil, dessen Feststoffanteil in der Mischung, mit einem Gewichtsanteil von wenigstens 1,5 Gewichts %, vorliegt. Der alkalische Anteil umfasst wenigstens ein Alkalisilikat, welches reaktives Silizium für Bindungen zur Verfügung stellt. Zudem umfasst der alkalische Anteil wenigstens ein Erdalkalimetallhydroxid und/oder wenigstens Alkalimetallhydroxid, welche den alkalisch reaktiven Anteil der Zuschlagskörnung mit Erdalkalimetallhydroxiden und/oder Alkalimetallhydroxiden anreichert.

Hierbei reichern das wenigstens ein Erdalkalimetallhydroxid und/oder das wenigstens Alkalimetallhydroxid den alkalisch reaktiven Anteil der Zuschlagskörnung mit ihren negativ geladenen Ionen an. Negativ geladene Hydroxidionen (OH-) entstehen, wenn Basen mit Wasser reagieren oder sie binden selbst Wasserstoffionen aus der Dissoziation des Wassers. Der alkalische Anteil der Mischung kann durch diese Basen auf einen gewünschten Wert eingestellt werden. Ältere, stärker carbonatisierte Betone, mit einem geringeren Basenanteil, können daher höhere Gewichtsanteile an Alkalien für eine ausreichende Anreicherung mit negativ geladenen Ionen benötigen als frischere, weniger carbonatisierte Betone.

In vorteilhafter Weise wird ein Aushärtungsprozess der Mischung durch den Anteil an recyclierten Beton und den alkalischen Anteil mit Alkalisilikat und Erdalkalimetallhydroxid oder mit Alkalisilikat und Alkalimetallhydroxid oder mit Alkalisilikat und Erdalkalimetallhydroxid und Alkalimetallhydroxid gesteuert. Die Mischung härtet in Abhängigkeit der Menge des zugegebenen recyclierten Betons und des alkalischen Anteils aus. Der recyclierte Beton kann zudem als Zuschlag wirken, wobei Körnungen des Betons auch verklebt werden können. Die Zuschlagskörnung kann in der Mischung mit einem Gewichtsanteil von mindestens 60 Gewichts % und maximal 90 Gewichts % vorliegen.

Optional kann die Zuschlagskörnung in der Mischung mit einem Gewichtsanteil von mindestens 70 Gewichts% und maximal 95 Gewichts%, mit angepasstem Wassergehalt, vorliegen.

Da die erfindungsgemäße Mischung auch ohne klassische Bindemittel abbinden kann und zudem den primären Bedarf an klassischen Zuschlägen, wie beispielsweise Sand, Kies, Splitt, Fasern, Klinker, Schamotte, und Mischungen davon reduzieren kann, können dadurch in vorteilhafter Weise Ressourcen, insbesondere endliche Ressourcen oder Ressourcen, welche nicht überall verfügbar, sind eingespart werden. Des Weiteren kann durch die Verwendung von recycliertem Material als Gesteinskörnung ein Stoffkreislauf geschlossen werden. Hierbei wird in vorteilhafter Weise Abrissmaterial oder anderes geeignetes Material mit Betonanteil wieder verwertet. Dadurch können Ressourcen geschont und Transportwege reduziert werden.

In vorteilhafter Weise werden durch die erfindungsgemäße Mischung, welche in ihrer einfachsten Form lediglich recycliertes, anorganisches, körniges Material, Wasser, Alkalisilikat, Erdalkalimetallhydroxid und/oder Alkalimetallhydroxid umfasst, umweltschonend bereits verwertete Bestandteile wiederverwertet. Des Weiteren kann vor Ort vorhandenes Abrissmaterial oder Ausschussmaterial zur Herstellung der erfindungsgemäßen Mischung genutzt werden. Dadurch können in vorteilhafter Weise Transportwege reduziert werden, des Weiteren kann die Wiederverwertung von Ausschuss und Abrissmaterial gefördert werden. Zudem können Kosten für Bindemittel und Zusatzstoffe deutlich reduziert werden. Des Weiteren sind die Mischung selbst und aus der Mischung gebildete Körper recyclebar.

In vorteilhafter Weise kann die erfindungsgemäße Mischung in ihrer einfachsten Form aus einer Zuschlagskörnung, einem Zusatzmittelgemisch und Wasser, bestehen.

In einer alternativen Ausgestaltung kann die erfindungsgemäße Mischung aus einer Zuschlagskörnung, einem Zusatzmittelgemisch, Wasser und einem Zusatzstoffgemisch bestehen, wobei das Zusatzstoffgemisch aus einem inaktiven Zusatzstoff oder aus mehreren inaktiven Zusatzstoffen besteht. Die inaktiven Zusatzstoffe können das Erreichen eines vorgegebenen Parameters für einen ausgehärteten Körper unterstützen, wie beispielsweise, eine Kantenfestigkeit und/oder eine Zugfestigkeit und/oder eine Dichte.

Das in der Mischung vorhandene Wasser kann die Summe aus einem Zugabewasser, der Eigenfeuchtigkeit, beispielsweise als Oberflächenfeuchte, der Zuschlagskörnung und des Wassers der zugegebenen wässrigen Zusatzmittel, abzüglich der von der Zuschlagskörnung durch Poren aufgenommenen Wassermenge sein. Das bedeutet, dass das Wasser als Zugabewasser zugeben werden kann. Zusätzlich oder alternativ kann das Wasser in Form von einer Lösung des alkalischen Anteils und/oder in Form einer Lösung des Zusatzmittelgemischs zugegeben werden. Zusätzlich oder alternativ kann das Wasser in Form von Eigenfeuchtigkeit der Zuschlagskörnung, welche auch witterungsbedingt und/oder lagerbedingt sein kann, zugegeben werden.

Im Wasser können die reaktiven Bestandteile in vorteilhafter Weise gelöst werden. Zudem können einige in der Mischung ablaufende Abbindereaktionen hydraulische Reaktionen sein, welche erst nach Zugabe von Wasser starten.

Des Weiteren kann die Mischung in einer weiteren alternativen Ausgestaltung im Zusatzstoffgemisch zusätzlich oder alternativ zu den inaktiven Zusatzstoffen aktive Zusatzstoffe aufweisen, welche den Aushärtungsprozess durch zusätzliche chemische Reaktionen und chemische Bindungen unterstützen und/oder beschleunigen.

In der erfindungsgemäßen Mischung wirkt insbesondere Calciumhydroxid (Ca(OH)$_2$), welches bei der ursprünglichen Hydratation des Zementes der Porenlösung des Betons frei geworden ist, reaktiv in der Zuschlagskörnung und wird mit Alkalimetallhydroxiden und/oder Erdalkalimetallhydroxiden angereichert, wodurch in vorteilhafter Weise bei einer Reaktion mit dem Alkalisilikat neue Bindungen und Bindungskräfte in der Mischung entstehen.

In der erfindungsgemäßen Mischung können bei ausreichender Reaktivität des recyclierten Beton bzw. der aus dem Beton gelösten Aluminiumanteile und Siliziumanteile und der nicht erforderlichen zusätzlich zugegeben puzzolanischen Bindemittel, wie beispielsweise Tonerden und/oder Schamotte und/oder Ziegel mit effektiver Reaktivität und Ionenlöslichkeit geopolymere Bindungen entstehen, die durch Si(OH)$_4$ und Al(OH)$_4$ in Lösung eine Polykondensation ermöglichen, was sich günstig auf die Aushärtung auswirkt.

Ein aus der erfindungsgemäßen Mischung gebildeter Körper weist Erdalkalisilikatverbindungen und/oder Alkalisilikatverbindungen, beispielsweise Calciumsilikatverbindungen, im gesamten Körper auch in tieferen Bereichen und im Kern des Körpers auf. Diese Erdalkalisilikatverbindungen und/oder Alkalisilikatverbindungen können hauptsächlich zum Aushärtungsprozess beitragen.

Zudem weist ein solcher Körper Calciumcarbonatverbindungen in Bereichen auf, welche mit Kohlenstoffdioxid (COz) in Kontakt kommen. Hierbei kann Kohlenstoffdioxid (COz) in der trockenen und/oder erdfeuchten Gesteinskörnung eingemischt sein. Zudem kann eine für Kohlenstoffdioxid (COz) der Umgebungsluft erreichbare Oberflächenschicht des Körpers Calciumcarbonatverbindungen aufweisen.

Zudem kann die Oberfläche der ausgehärteten Mischung bzw. die Oberfläche des ausgehärteten Körpers wasserabweisend sein. Dieser Effekt kann, nach dem Aushärten der Mischung im inneren, durch ein nachträgliches Verkieseln bewirkt werden. Beispielsweise kann das in die Mischung eigemischte wasserlösliche Alkalisilikat, beispielsweise Natriumsilikat und/oder Kaliumsilikat und/oder-Lithiumsilikat, welches nicht für Reaktionen oder Bindungen im inneren des Körpers verbraucht wurde, das Verkieseln ermöglichen.

Im alkalischen Anteil des Zusatzmittelgemischs kann der Anteil des wenigstens einen Alkalisilikats größer sein als der Anteil der anderen alkalischen Zusatzmittel. Dadurch kann im alkalischen Anteil des Zusatzmittelgemischs der Anteil des wenigstens einen Alkalimetallhydroxids geringer sein als der Anteil des wenigstens einen Alkalisilikats. Des Weiteren kann im alkalischen Anteil des Zusatzmittelgemischs der Anteil des wenigstens einen Erdalkalimetallhydroxids geringer sein als der Anteil des wenigstens einen Alkalisilikats. Zudem können im alkalischen Anteil des Zusatzmittelgemischs die Anteile des wenigstens einen Alkalimetallhydoxids und des wenigstens einen Erdalkalimetallhydroxids zusammen geringer sein als der Anteil des wenigstens einen Alkalisilikats. Da der Anteil des wenigstens einen Alkalimetallhydoxids und/oder des wenigstens einen Erdalkalimetallhydroxids geringer ist als der Anteil des wenigstens einen Alkalisilikats kann der pH-Wert der Mischung nicht über 13 steigen. Dadurch kann das einen längeren Zeitraum betreffende Anlösen von amorphen Silicat aus Natursteinzuschlägen, welche Teil der recyclierten Gesteinskörnung sein können, und aus den optional zusätzlich eingegebenen Natursteinkörnungen, erschwert oder ganz verhindert werden. Dadurch kann in vorteilhafter Weise eine unerwünschte Alkali-Kieselsäure-Reaktion, insbesondere im ausgehärteten Körper, vermieden werden, welche durch das volumenvergrößernde Kieselgel Schäden, beispielsweise in Form von Rissen, in der ausgehärteten, zementfreien Mischung erzeugen kann.

Ein vorteilhaftes Anlösen der Grenzflächen der Betonkornoberfläche kann auch mit einem geringeren Anteil an Alkalimetallhydroxiden und Erdalkalimetallhydroxiden ermöglicht werden, das physikalische und/oder chemische Anlösen der Grenzflächen ist nicht für die Gesamtaushärtung der Mischung erforderlich.

Beim Anmischen der Mischung können durch Anteile des Alkalimetallhydroxids und/oder des Erdalkalimetallhydroxids Siliziumanteile aus dem Beton, und nicht aus den Natursteinzuschlägem, gelöst werden. Zudem können aus zusätzlich zugeführten, Puzzolanen, welche in der Mischung optional sind, Siliziumanteile gelöst werden. Sollte in einer Ausführung der Erfindung Kaliwasserglas zusätzlich trocken zugegeben werden, kann auch aus dem Kaliwasserglas das Silizium gelöst werden.

Zusätzlich können das Alkalimetallhydroxid und/oder das Erdalkalimetallhydroxid die Aluminiumanteile aus dem Beton lösen. Zudem können das Alkalimetallhydroxid und/oder das Erdalkalimetallhydroxid die Aluminiumanteile aus zusätzlich zugeführter kalzinierter Tonerde und/oder zusätzlich zugeführten Puzzolanen lösen, wobei die kalzinierte Tonerde und die Puzzolane in der Mischung optional sind.

Durch die gelösten Aluminium- und Siliziumanteile insbesondere aus dem alkalisch aktivierte Beton, können geopolymere Bindungen entstehen, die durch Si(OH)$_4$ und Al(OH)$_4$ in Lösung eine Polykondensation ermöglichen.

Das Alkalimetallhydroxid, kann ein Natriumhydroxid, Kaliumhydroxid, oder ein Lithiumhydroxid sein. Das Erdalkalihydroxid kann ein Calciumhydroxid oder ein Magnesiumhydroxid sein. Es sind auch Mischungen verschiedener Alkalimetallhydroxide und Erdalkalihydroxide möglich.

Unter recyclierten, anorganischen, körnigen Material, kann im Folgenden insbesondere recyclierte Gesteinskörnung (RC) nach DIN EN 12620 verstanden werden. Hierbei umfasst die recyclierte Gesteinskörnung Typ 1 (RC1) mindestens 90 Gewichts % Beton oder Naturstein und maximal 10 Gewichts % Nebenbestandteile, wie beispielsweise Ziegel oder Kalksandstein.

Die recyclierte Gesteinskörnung Typ 2 (RC2) umfasst mindestens 70 Gewichts % Beton oder Naturstein und maximal. 30 Gewichts % Nebenbestandteile, wie beispielsweise Ziegel oder Kalksandstein.

Für die erfindungsgemäße Mischung weist das recyclierte, anorganische, körnige Material eine recyclierte Gesteinskörnung mit Beton auf. Die Gesteinskörnungen können zudem Naturstein umfassen. Eine Gesteinskörnung welche ausschließlich Naturstein umfasst, ist für die erfindungsgemäße Mischung weniger geeignet.

Zusätzlich kann unter dem recyclierten, anorganischen, körnigen Material auch eine Sonderform der Gesteinskörnung Typ 1 (RC1) in Form von sortenreinen Betonbruch aus bekannten, industriellen Beton verstanden werden.

Unter sortenrein wird hierbei verstanden, dass das recyclierte, anorganische, körnige Material, keinen oder lediglich einen sehr geringen Anteil an Nebenbestandteilen, wie beispielsweise Ziegel oder Kalksandstein oder Naturstein, umfassen kann und zu 100% aus Beton stammt. Der geringe Nebenbestandanteil ist möglich, da diese in der jeweiligen Produktionen nicht verwendet werden.

Der alkalisch reaktive Anteil der Zuschlagskörnung entspricht beim Typ 1 und Typ 2 und bei der Sonderform des Typs 1 aus hydraulisch ausgehärteten Materialien, insbesondere zerkleinertem, ausgehärtetem Beton. Ein zusätzlicher Anteil der Zuschlagskörnung kann hochgebrannten Materialien entsprechen, beispielsweise Ziegeln. Dadurch unterscheidet sich die erfindungsgemäße Mischung vom bekannten römischen Beton, welcher durch Reaktionen von Ziegelmehl und Kalk hydraulisch aushärtet.

Das wiederverwertete Material der Zuschlagskörnung kann ein Ausschuss oder ein Rest aus einer Stein-, Platten-, Zement-, Betonherstellung sein, dadurch kann das wiederverwertete Material einen großen Anteil an zerkleinertem, ausgehärtetem Beton und dadurch einen großen alkalisch reaktiven Anteil aufweisen, insbesondere da dieser Beton jünger ist als der Beton aus älteren Bauwerken. Das wiederverwertete Material kann auch ein Abrissmaterial sein. Dieses kann einfach in großen Mengen beschafft werden, hat aber den Nachteil, dass geringere Alkalitäten aufgrund bereits stattgefundener Carbonatisierungen möglich sind. Ebenfalls vorstellbar ist die Wiederverwendung dieser erfindungsgemäßen, zementfreien Mischung und die Wiederverwendung aus dieser Mischung gebildeter Körper.

Die Zuschlagskörnung kann zusätzlich nicht reaktive Anteile, wie Sand, Splitt, Klinker, Schamotte oder ähnliches aufweisen. Die Zuschlagskörnung kann übliche Körnungsgrößen und/oder Sieblinien und/oder Oberflächenfeuchte ohne Einschränkungen aufweisen.

Die zementfrei aushärtende Mischung kann auch Tone und/oder Quarzmehle aufweisen, daher kann die Mischung einer ungebrannten Keramik entsprechen.

Das Alkalimetallhydroxid, das Erdalkalimetallhydroxid und Alkalisilikat, können als Feststoff, beispielsweise in Pulverform, oder in einer wässrigen Lösung vorliegen.

Der Gewichtsanteil, welchen eine wässrige Lösung in der Mischung ausmacht, ist abhängig von der Konzentration des Alkalimetallhydroxids oder des Erdalkalimetallhydroxids oder des Alkalisilikats in der Lösung.

Das Alkalisilikat kann wegen dem bereits gelösten Silikat bevorzugt als wässrige Lösung vorliegen bzw. als wässrige Lösung hinzugefügt werden. Das Erdalkalimetallhydroxid und Alkalimetallhydroxid können trocken in Form von Pulver und/oder Pellets vorliegen oder in Form von Pulver oder Pellets der Mischung zugefügt werden. Zusätzlich oder alternativ können Erdalkalimetallhydroxid und Alkalimetallhydroxid in Lösung vorliegen oder als Lösung zur Mischung hinzugefügt werden.

Das Alkalimetallhydroxid, kann ein Natriumhydroxid, Kaliumhydroxid, oder ein Lithiumhydroxid sein. Das Erdalkalihydroxid kann ein Calciumhydroxid oder ein Magnesiumhydroxid sein. Es sind auch Mischungen verschiedener Alkalimetallhydroxide und Erdalkalihydroxide möglich.

Für mögliche Bindungen, welche zur Aushärtung der erfindungsgemäßen Mischung beitragen, stellt das Alkalisilikat reaktives amorphes Silizium für chemische Reaktionen zur Verfügung.

Der alkalisch aktivierbare Anteil der Zuschlagskörnung der erfindungsgemäßen Mischung ist zerkleinerter, ausgehärteter Beton, beispielsweise Betonsplitt, und besteht aus hydraulisch abgebundenen Betonsteinen.

Die Menge des vorhandenen Calciumhydroxids ($Ca(OH)_2$) als alkalisch aktivierbarer Anteil, der im ausgehärteten Beton ausgebildet ist, weist in vorteilhafter Weise geringe Schwankungen auf. Der Grund ist, dass der Gehalt an Calciumhydroxid den pH-Wert der Porenlösung und somit den Bewehrungsschutz im alkalischen Milieu des ursprünglichen Betons bestimmt und dadurch der Maximalgehalt der Puzzolane, welche den Hauptklinkeranteil im Zement reduzieren, bei den Zementarten im Beton normativ ist.

Die chemischen Reaktionen des Calciumhydroxids ($Ca(OH)_2$) mit dem Alkalisilikat unterscheiden sich von den bekannten puzzolanischen Reaktionen dadurch, dass die Zugabe von Wasser für eine Reaktion nicht ausreicht, da Wasser den pH-Wert des Calciumhydroxid ($Ca(OH)_2$) senkt.

Zudem weist der reaktive Anteil kein reaktives Silizium oder Aluminium oder andere in Puzzolanen vorhandene reaktive Stoffe auf. Das Silizium oder Aluminium oder andere in Puzzolanen vorhandene reaktive Stoffe, sind in der recyclierten Gesteinskörnung fest gebunden.

Alkalisilikate sind in neutralen und alkalischen Lösungen stabil. Sie sind auch als wässrige Alkalilösung oder als Wassergläser bekannt.

Im Folgenden werden mögliche in der Mischung ablaufende chemische Reaktionen beschrieben, welche zum Abbinden und Aushärten der Mischung beitragen.

Unter der Annahme, dass das Alkalisilikat einem Natronwasserglas entspricht, ist folgende, vereinfacht, dargestellte Reaktionsgleichung in einer alkalischen Umgebung vorstellbar:

$$reakt.\ Calciumhydroxid + Alkalisilikat \rightarrow Natriumhydroxid + Calziumsilikat$$

$$Ca(OH)_2 + Na_2SiO_3 \rightarrow 2NaOH + CaSiO_3$$

In diesem Beispiel würde die Bildung von Calciumsilikat ($CaSiO_3$) zu neuen Bindungen in der erfindungsgemäßen Mischung führen. Das zusätzlich entstandene Natriumhydroxid (NaOH) ist wasserlöslich und steht somit wieder für neue, chemische Reaktionen und/oder Prozesse zur Verfügung, insbesondere als Nukleophil, einem Reaktionspartner, welcher ein Elektronenpaar für die neu zu bildenden Bindungen liefert.

Für weitere mögliche Bindungen, welche zur Aushärtung der erfindungsgemäßen Mischung beitragen können, kann die Mischung an ihrer ausgehärteten Oberfläche in vorteilhafter Weise Kohlenstoffdioxid (COz) aus der Umgebungsluft durch enthaltene bzw. noch vorhandene und/oder restliche Calciumhydroxide ($Ca(OH)_2$) aus der Zuschlagskörnung binden.

Zusätzlich kann Kohlenstoffdioxid ($CO_2$) im Gemisch durch enthaltene Calciumhydroxide ($Ca(OH)_2$) aus der Zuschlagskörnung gebunden werden. Zusätzlich kann das Kohlenstoffdioxid- ($CO_2$) der in der losen Zuschlagskörnung vorhandenen Umgebungsluft und/oder der durch Mischprozesse in die Mischung eingebende Umgebungsluft, durch enthaltene Calciumhydroxide ($Ca(OH)_2$) aus der Zuschlagskörnung gebunden werden. Hierbei verbindet sich das Kohlenstoffdioxid ($CO_2$) aus der Umgebungsluft bzw. aus der Luft im Gemisch mit dem überschüssigen Calciumhydroxid ($Ca(OH)_2$). Dadurch bildet sich Calciumcarbonat ($CaCo_3$). Dadurch wird die Oberfläche der Mischung bzw. die Oberfläche des durch die Mischung gebildeten Körpers noch dichter und wasserabweisender. Kohlenstoffdioxid ($CO_2$) wird hierbei zusätzlich gespeichert.

Folgende Reaktionsgleichung ist vorstellbar:

$$reakt.\ Calciumhydroxid + Kohlenstoffdioxid \rightarrow Calciumcarbonat + Wasser$$

$$Ca(OH)_2 + CO_2 \rightarrow CaCO_3 + H_2O$$

Steht zudem zusätzlich Kalisilikat zur Verfügung, bildet sich mit dem Calciumhydroxid ein Calciumsilikat und ein Alkalicarbonat.

Folgende Reaktionsgleichung ist vorstellbar:

$$reakt.\ Calciumhydroxid + Kaliwasserglas + Kohlenstoffdioxid \rightarrow Calciumsilikat + Kaliumcarbonat$$

$$Ca(OH)_2 + K_2SiO_3 + CO_2 \rightarrow CaSiO_3 + K_2CO_3$$

Das Calciumsilikat trägt hierbei zu den Bindungen in der Mischung bei. Das Kaliumcarbonat liegt als wasserlösliche Pottasche vor und kann bei Bedarf abgewaschen werden.

Das Alkalisilikat $Na_2SiO_3$ kann aufgrund seiner dauerhaften Wasserbeständigkeit für die Zuschlagskörnung in vorteilhafter Weise ein zusätzliches Klebemittel sein, welches das verkleben der alkalisch nicht reaktiven Anteile unterstützen kann.

Weitere Zuschläge können mit sich bildenden Siliziumoxid-Gel gebunden werden.

Folgende Reaktionsgleichung ist vorstellbar:

$$Kaliwasserglas + Kohlenstoffdioxid \rightarrow Siliziumoxid + Kalicarbonat$$

$$K_2SiO_3 + CO_2 \rightarrow SiO_2 + CO_3$$

Die dargestellten und beschriebenen Reaktionsgleichungen sind so zu verstehen, dass diese nicht hintereinander bzw. in einer bestimmten Reihenfolge oder nur für sich stattfinden. Vielmehr können mehrere Reaktionen untereinander und/oder zeitgleich stattfinden.

Der pH-Wert der Mischung bzw. des Körpers enthält durch die zusätzlich eingemischten Alkalien weiterhin einen hohen, alkalischen Wert von ca. pH 12. Dadurch hat die erfindungsgemäße Mischung eine alkalische Schutzfunktion, im Gegensatz zu alten Betonteilen, die vollständig carbonatisiert sind. Metall- oder Stahlelemente sind somit effektiv vor Korrosion geschützt.

Basis für chemische Reaktionen und den daraus resultierenden korrespondierenden chemischen Bindungen zur Aushärtung der Mischung sind in vorteilhafter Weise die alkalisch reaktiven Anteile der Zuschlagskörnung in Kombination mit den Alkalimetallhydroxiden, Erdalkalihydroxiden und den Alkalisilikaten. Dadurch ist der Aushärtungsprozess von diesen Komponenten abhängig und kann durch die Anteile dieser Komponenten in der Mischung gesteuert werden. Dadurch dient die Zuschlagskörnung in der Mischung sowohl als üblicher Zuschlag als auch zur Bereitstellung eines Bindemittels. Durch diese Kombination ist in vorteilhafter Weise eine gleichmäßige Aushärtung in der erfindungsgemäßen Mischung ohne die Zugabe von klassischen Bindemitteln möglich.

Die erfindungsgemäße Mischung aus Zuschlagskörnung, Wasser, und Zusatzmittelmischung härtet hierbei nicht dadurch aus, dass eine Verklebung und Verkieselung, wie sie bei Silikatfarben bekannt ist, erfolgt. Die Aushärtung erfolgt durch die beschriebenen chemischen Reaktionen gleichmäßig im gesamten Körper, welcher sich nicht auf dünne Schichten beschränkt.

Durch die erfindungsgemäße Mischung kann des Weiteren in vorteilhafter Weise eine Prozesssicherheit verbessert werden, da der pH-Wert durch das Zusatzmittelgemisch zuverlässig eingestellt werden kann. Beispielsweise können, wenn der alkalisch aktivierbare Anteil der Zuschlagskörnung älteren Beton mit bereits carbonatisierten $Ca(OH)_2$ umfasst, mehr Alkalien zugefügt werden, um einen ausreichenden pH-Wert zu erreichen, als bei jüngerem Beton.

Des Weiteren bilden Alkalimetallhydroxide und Erdalkalimetallhydroxide wasserlösliche Carbonate. Diese können einfach von einer Oberfläche entfernt werden. Des Weiteren kann eine Überdosierung an Alkalimetallhydroxiden in der Mischung an der Oberfläche zu vermehrter, wasserlöslicher Pottasche führen. Diese kann in Kleinstmengen der Oberfläche positive Eigenschaften verleihen, wie eine verbesserte Reinigungsfähigkeit, dem Lösen von organischen Substanzen, wodurch dauerhafte Verschmutzungen vermieden werden können. Die Oberflächen können dadurch in vorteilhafter Weise sauber bleiben. Des Weiteren kann die Pottasche in vorteilhafter Weise ein umweltfreundliches Taumittel im Winter als Schutz vor Glätte sein.

In bekannten Betonmischungen mit gebrannten Kalken entstehen dagegen schwer lösliche Calciumcarbonate welche an der Oberfläche ausblühen können und zu einer Verschlechterung der Optik führen können.

Die erfindungsgemäße Mischung ist in vorteilhafter Weise fließ- und erstarrungsfähig. Des Weiteren kann die Mischung selbstverdichtend, aushärtend sein. Zudem kann die Mischung in vorteilhafter Weise vielfältig eingesetzt werden. Die Herstellung aller bekannten Betonbauteile ist mit dieser Mischung möglich. Die Mischung kann, beispielsweise für stahlbewehrte Betonbauteile, Estriche, Mörtel, Putz und Beton verwendet werden. Die Mischung kann für Bauwerke, beispielsweise für den Bau von Häusern, und für kleinere Betonelemente, beispielsweise für Pflastersteine verwendet werden. Des Weiteren kann die Mischung bei allen bekannten Verarbeitungsverfahren von Beton verwendet werden.

In vorteilhafter Weise wird für die erfindungsgemäße Mischung kein Zement und dadurch kein Zementklinker hergestellt. Dadurch können große Mengen Kohlenstoffdioxid eingespart werden.

In der Mischung kann gebrannter Zement vorliegen. Dieser weist keine hydraulische Aktivitätseigenschaft auf, so dass keine Calzination stattfindet und der gebrannte Zement bei Wasserzugabe keinen Binder aus Calciumsilikathydrat-Phasen (CSH-Phasen) und/oder Natrium-Alumino-Silikate-Hydrate, so genannte Sodium-Alumino-Silikate-Hydrate (NASH), und/oder Kalium-Alumino-Silikate-Hydrate, so genannte Potassium-Alumino-Silikate-Hydrate (KASH), ausbildet.

Der gebrannte Zement kann mit Kohlenstoffdioxid und Wasser Calciumcarbonat bilden. Diese Reaktion kann zum Aushärten der Mischung im geringen Maße beitragen, insbesondere an der Oberfläche der Mischung oder des Körpers. Die bei dieser Reaktion gebildeten Bindungen und Bindungskräfte sind aber nicht die grundlegenden Bindungen und Bindungskräfte, die zum vollständigen Aushärten der Mischung führen.

Nach einer günstigen Ausgestaltung der Mischung kann die Mischung einen pH-Wert zwischen 11,5 und 12,6 aufweisen. Würde der pH-Wert in der Mischung durch den Anteil an Alkalihydroxiden und Erdalkalihydroxiden auf Werte ansteigen, welche 12,6 längerfristig überschreiten, kann eine Löslichkeit des Calciumhydroxids ($Ca(OH)_2$) überschritten werden, so dass Calciumhydroxid ($Ca(OH)_2$) ausfallen kann. Dieses ausgefallene Calciumhydroxid ($Ca(OH)_2$) stünde dann nicht mehr für die Bindungsreaktionen zur Verfügung und würde das Aussehen der Oberfläche des aus der Mischung gebildeten Körpers durch weiße, nur schwer lösliche Carbonatausblühungen verändern. Daher ist das Ausfällen von Calziumhydroxid ($Ca(OH)_2$) nicht erwünscht.

Zudem kann bei einem pH-Wert, welcher 13 längerfristig überschreitet, unerwünschtes Kieselgel aus reaktivem Silizium gebildet werden. Diese Reaktion kann zu einer Volumenzunahme führen, welche zu Rissen in dem aus der Mischung gebildeten Körper führen kann. Daher ist auch das Bilden von Kieselgel nicht erwünscht.

Bei einer längerfristigen Erhöhung des pH-Werts auf Werte über 13 könnten nicht reaktive Anteile der Zuschlagskörnung, insbesondere Siliziumoxid $SiOz$ und Aluminium $Al_2O_3$, in Hydratphasen des zugegebenen, mit Zement ausgehärteten Betons reaktiviert werden. Die bereits beschriebenen unerwünschten Reaktionen, insbesondere die Bildung von Kieselgel, überwiegen in der erfindungsgemäßen Mischung die Vorteile der Reaktivierung des Siliziumoxids $SiO_2$ und Aluminiumoxids $Al_2O_3$ bei einer Erhöhung des pH-Werts über 12,6.

Der pH-Wert könnte dennoch kurzzeitig über 13 ansteigen, wenn für puzzolanische Reaktionen bei optional zugegebenen Puzzolanen Ionen ($Si_4+$, $Al_3+$) gelöst werden.

Bei einem pH-Wert, welcher 11,5 überschreitet, ist das erwünschte alkalische Umfeld für die Reaktion des Calciumhydroxids ($Ca(OH)_2$) mit dem Alkalisilikat und für die Reaktion des Calciumhydroxids ($Ca(OH)_2$) mit dem Kohlenstoffdioxid ($CO_2$) gegeben.

Der alkalische Anteil des Zusatzmittelgemischs kann als Lösung in der Mischung vorliegen und wenigstens 10 Gewichts-% in der Mischung ausmachen.

Nach einer günstigen Ausgestaltung der Mischung kann das wenigstens eine Alkalisilikat als wenigstens eine Alkalisilikatlösung vorliegen, beispielhaft mit den spezifischen Eigenschaften $K_2O$ mit 7,8 - 8,8 Gewichts-% und $SiO_2$ mit 20,3 - 21,4 Gewichts-%, mit einem Gewichtsverhältnis von 2,4 - 2,6 und einem Molverhältnis mol $SiO_2$ / mol $K_2O$ von 3,92 - 4,08 und einer Viskosität von 20 - 70 mPa·s. Die Lösung kann, gemessen bei 20°C, eine Dichte von 1,24 - 1,26 $g/cm^3$ aufweisen.

Die wenigstens eine verwendete Alkalimetallhydroxidlösung oder Erdalkalimetallhydroxidlösung kann beispielhaft einen Massenanteil von 45 Gewichts-% bezogen auf 1 kg aufweisen. Beispielhaft kann eine Kaliumhydroxidlösung eine bekannte Molmasse von 56,11 g/mol für $K_2O$ aufweisen. Die Stoffmengenkonzentration liegt bei 11,5898 mol/Liter. Daraus ergibt sich die Massenkonzentration.

Diese beiden Lösungen mit den beschriebenen Eigenschaften können in einem Verhältnis von 5:1 bis 20:1 gemischt werden. Hierbei können die Alkalien der Alkalisilikatlösung und der Alkalimetallhydroxidlösung- bzw. Erdalkalimetallhydroxidlösung gleichmäßig in den alkalischen Anteil des Zusatzmittelgemischs eingemischt sein.

Wenn das Alkalisilikat und die Alkali- und/oder Erdalkalihydroxidlösungen in anderen Konzentrationen, sowie mit anderen Eigenschaften vorliegen, kann das Verhältnis dieser Lösungen empirisch und/oder rechnerisch entsprechend angepasst werden.

Die Alkalimetallhydroxide und die Erdalkalimetallhydroxide können in einer wässrigen Lösung oder trocken, beispielsweise pulverförmig, der erfindungsgemäßen Mischung zugeben werden. Bei einer Zugabe im trockenen Zustand lösen sich das Erdalkalimetallhydroxid und das Alkalimetallhydroxid im vorhandenen Wasser exotherm. Die dabei entstehende Wärme kann vorteilhaft auf weitere Reaktionen wirken, da sie wie bei der Katalyse chemische Prozesse ermöglicht und beschleunigt.

Das Alkalisilikat kann ebenfalls in einer wässrigen Lösung oder trocken, beispielsweise pulverförmig, der erfindungsgemäßen Mischung zugeben werden. Da zum Lösen des Alkalisilikats Energie aufgewendet werden muss, kann die Verwendung einer wässrigen Lösung vorteilhaft sein, wenn vor Ort die Bedingungen zum Erwärmen der Alkalisilikat-Wasser-Lösung nicht oder nur schwer erfüllbar sind.

Das Alkalisilikat kann wegen dem bereits gelösten Silikat bevorzugt als wässrige Lösung vorliegen bzw. als wässrige Lösung hinzugefügt werden. Das Erdalkalimetallhydroxid und Alkalimetallhydroxid können trocken in Form von Pulver und/oder Pellets vorliegen oder in Form von Pulver oder Pellets der Mischung zugefügt werden. Zusätzlich oder alternativ können Erdalkalimetallhydroxid und Alkalimetallhydroxid in Lösung vorliegen oder als Lösung zur Mischung hinzugefügt werden.

Nach einer günstigen Ausgestaltung der Mischung kann der alkalisch reaktive Anteil der Zuschlagskörnung in Form von zerkleinertem, ausgehärtetem Beton wenigstens 10 Gewichts % der Mischung ausmachen. Zusätzlich oder alternativ kann der alkalisch reaktive Anteil der Zuschlagskörnung in Form von zerkleinertem, ausgehärtetem Beton wenigstens 99 Gewichts % der Zuschlagskörnung ausmachen Unter dem reaktiven Anteil wird hierbei nicht die chemische Verbindung Calciumhydroxid $Ca(OH)_2$, verstanden, sondern die im ausgehärteten Beton vorliegende, reaktive Gesamtmischung. Der Anteil der reaktiven Bestandteile ist bei einem Anteil 10 Gewichts % in der Mischung recht gering, reicht jedoch zum Aushärten der erfindungsgemäßen Mischung aus. Weist die Zuschlagskörnung zu 99 Gewichts % ausgehärteten Beton auf, können in vorteilhafter Weise große Mengen üblichen Betonbruchs und/oder Betonsplitts wiederverwertet werden.

Des Weiteren weist die erfindungsgemäße Mischung durch den hohen alkalisch reaktiven Anteil in der Zuschlagskörnung gute Abbindeeigenschaften auf. Beispielsweise ist als Zuschlagskörnung eine recyclierte Gesteinskörnung vom Typ 1 vorstellbar, welche sortenrein bei der Herstellung von Betonelementen, beispielsweise von Pflastersteinen, die der DIN EN 18218 entsprechen, anfällt, wobei bekannt ist, dass keine weiteren nicht reaktiven Stoffe in die Gesteinskörnung gelangen können.

Nach einer günstigen Ausgestaltung der Mischung können die Anteile der Zuschlagskörnung Korngrößen zwischen 0,05 mm und 32 mm, insbesondere zwischen 0,05 mm und 16 mm, aufweisen. Bei diesen Korngrößen ist ein zuverlässiges Verkleben der einzelnen Körner möglich. Zudem ist eine genügend große Reaktionsfläche der reaktiven Bestandteile für Bindungsreaktionen bei diesen Korngrößen gegeben. Je kleiner die Korngröße der reaktiven Bestandteile der Zuschlagskörnung ist, desto größer ist die Reaktionsfläche. Korngrößen bis zu 16 mm sind für kleinere Betonelemente, wie Formsteine, geeignet. Korngrößen bis zu 32 mm sind für Bauwerke geeignet. Die reaktiven Anteile und die nicht reaktiven Anteile der Zuschlagskörnung können unterschiedliche Korngrößen aufweisen. Die Zuschlagskörnung kann durch verschiedene Siebe mit unterschiedlicher Maschenweite gesiebt werden, um die Korngrößen zu ermitteln. In vorteilhafter Weise können bei der Betonherstellung übliche Körnungsgrößen und Sieblinien der Zuschlagskörnung ohne Einschränkungen verwendet werden.

Nach einer günstigen Ausgestaltung der Mischung kann das Wasser in Form von Eigenfeuchte der Zuschlagskörnung und/oder als Lösungswasser im Zusatzmittelgemisch und/oder als Zugabewasser vorliegen. Das Wasser kann in der Mischung mit einem Gewichtsanteil zwischen 3 Gewichts % und 40 Gewichts % vorliegen. Das Wasser kann zum Lösen von Komponenten und zum Auslösen von hydraulischen und puzzolanischen Reaktionen verwendet werden. Der Anteil des Wassers ist zum einen davon abhängig, in welchem Verfahren der korrespondierende Körper hergestellt wird. Bei Drycastverfahren und Wetcastverfahren sind unterschiedliche Konsistenzen der Mischungen erforderlich. Zum anderen ist der Anteil des Wassers davon abhängig, zu welcher Expositionsklasse die Mischung zählt und welche Druckfestigkeit erwünscht ist. Das Wasser kann den pH-Wert der Mischung reduzieren.

Des Weiteren kann ein Wasserüberschuss zu einer unerwünschten Porenbildung im ausgehärteten Körper führen. Eine Anpassung der Konsistenz der Mischung ist auch durch ein geeignetes Fließmittel möglich. Da die erfindungsgemäße Mischung zumindest in ihrer einfachsten Form keine klassischen Bindemittel aufweist, kann kein klassischer Wasser-Zement-Wert oder Wasser-Bindemittel-Wert angegeben werden.

Nach einer günstigen Ausgestaltung kann das Zusatzstoffgemisch in der Mischung mit einem Gewichtsanteil von maximal 40 Gewichts % vorliegen und kann wenigstens einen inaktiven Zusatzstoff umfassen. Zusätzlich oder alternativ kann das Zusatzstoffgemisch wenigstens einen aktiven Zusatzstoff umfassen, welcher latent hydraulisch und/oder puzzolanisch ist. Inaktive Zusatzstoffe können auch als Zumahlstoffe und als Füllstoff bezeichnet werden. Der Füllstoff und Zumahlstoff ist inaktiv, kann jedoch durch die Veränderung der Packungsdichte der Zusatzstoffe eine beschleunigte Aushärtung und eine verbesserte Kantenstabilität des aus der ausgehärteten Mischung gebildeten Körpers ermöglichen.

Die aktiven Zusatzstoffe können unter anderem mit dem alkalisch aktivierbaren Anteil des Zuschlags und/oder mit dem alkalischen Anteil des Zusatzmittelgemischs chemisch reagieren. Die korrespondierenden chemischen Bindungen können in vorteilhafter Weise zum Aushärtungsprozess der Mischung beitragen, wodurch eine Festigkeit der Mischung im ausgehärteten Zustand in vorteilhafter Weise verbessert werden können.

Je höher der Anteil des wenigstens einen aktiven Zusatzstoffs in der erfindungsgemäßen Mischung ist, desto geringer kann der reaktive Anteil und dadurch der Anteil an Calciumhydroxid $Ca(OH)_2$ für die Hauptbindungen in der erfindungsgemäßen Mischung sein. Dadurch können die Calciumsilikate und die Calciumcarbonate zu Gunsten von puzzolanischen Verbindungen in der ausgehärteten Mischung reduziert sein.

Latenthydraulische Stoffe benötigen für eine chemische Reaktion eine sulfatische oder alkalische Anregung, um hydraulische Eigenschaften zu entwickeln.

Als puzzolanisch gelten Stoffe, die reaktionsfähiges Siliciumoxid $SiO_z$ enthalten und dadurch in wässriger Umgebung mit Calciumhydroxid $(Ca(OH)_2)$ zu C-S-H-Phasen reagieren. Diese Reaktionen sind volumenneutral.

Beispielsweise kann Calciumhydroxid $(Ca(OH)_2)$ mit Orthokieselsäure $(H_4SiO_4)$ aus dem Puzzolan zu einem Calciumsilikathydrat $(CaH_2SiO_4)$ reagieren, welches zum Aushärten der Mischung beiträgt.

$$Ca(OH)_2 + H_4SiO_4 \rightarrow CaH_2SiO_4 \cdot 2\ H_2O$$

Zudem sind geopolymere Bindungen möglich. Hierbei können gebildete Al-O-Si-Bindungen und/oder Si-O-Si-Bindungen zum Aushärten der Mischung beitragen.

Um ein Abfallen des pH-Werts in der Mischung durch puzzolanische Reaktionen zu verhindern oder zu erschweren, kann der Anteil an puzzolanischen Zusatzstoffen, insbesondere für Stahlbeton, maximal mit einem Anteil von 35 Gewichts % in der Mischung vorliegen. Auf puzzolanische Zusatzstoffe kann auch vollkommen verzichtet werden.

Nach einer günstigen Ausgestaltung der Mischung kann das Zusatzstoffgemisch einen Füller, insbesondere in Form von Quarzmehl und/oder Kalksteinmehl, als inaktiven Zusatzstoff umfassen, welcher bezogen auf den Anteil des Zusatzstoffgemischs im Bereich zwischen 1 Gewichts % und 100 Gewichts % vorliegen kann. Quarzmehl und Kalksteinmehl eignen sich in vorteilhafter Weise zum Verdichten der erfindungsgemäßen Mischung. Des Weiteren kann in vorteilhafter Weise eine Frühfestigkeit der erfindungsgemäßen Mischung durch einen Füller verbessert werden.

Des Weiteren kann durch den Füller eine Dichte und/oder Kantenstabilität des aus der Mischung gebildeten Körpers verbessert werden.

Nach einer günstigen Ausgestaltung der Mischung kann das Zusatzstoffgemisch ein organisches und/oder anorganisches Farbpigmentpulver, insbesondere ein alkalibeständiges Farbpigmentpulver, und/oder wenigstens eine organische und/oder anorganische Farbpigmentsuspension, insbesondere eine alkalibeständige Farbpigmentsuspension, als inaktiven Zusatzstoff umfassen.

Dieser inaktive Zusatzstoff kann die optische Wirkung der ausgehärteten Mischung verändern. Zudem kann der Farbeindruck der ausgehärteten Mischung in vorteilhafter Weise durch die Farbpigmente intensiv sein. Des Weiteren kann sich eine ungewöhnlich brillante Färbung einstellen. Günstiger Weise können in der Mischung auch verschiedenfarbige Muster erzeugt werden.

Nach einer günstigen Ausgestaltung der Mischung kann das Zusatzstoffgemisch kalziniertes Aluminiumoxid $Al_2O_3$ als aktiven Zusatzstoff umfassen, welcher bezogen auf den Anteil des Zusatzstoffgemischs im Bereich zwischen 1 Gewichts % und 100 Gewichts % vorliegen kann. Das kalzinierte Aluminiumoxid kann in vorteilhafter Weise zumindest mit den alkalischen Anteilen des Zusatzmittelgemischs reagieren und alumosilikatische Bindungen bewirken und dadurch zum Aushärtungsprozess der Mischung beitragen. Des Weiteren ist eine Reaktion mit dem alkalisch aktivierbaren Anteil des Zuschlagsgemischs vorstellbar, wobei auch diese Reaktion in vorteilhafter Weise zum Aushärtungsprozess der Mischung beitragen kann.

Nach einer günstigen Ausgestaltung der Mischung kann das Zusatzstoffgemisch natürliche und/oder künstliche Puzzolane als aktiven Zusatzstoff umfassen, welche bezogen auf den Anteil des Zusatzstoffgemischs im Bereich zwischen 1 Gewichts % und 100 Gewichts % vorliegen können. Beispielsweise können Trass und/oder Flugasche und/oder Microsilica und/oder gebrannter Ölschiefer und/oder Meta-Kaolin verwendet werden. Aluminiumoxid $Al_2O_3$ kann außer in reiner Form auch in Form von kalzinierter Tonerde im Zusatzstoffgemisch vorhanden sein.

In der erfindungsgemäßen Mischung können bei effektiver Reaktivität und Ionenlöslichkeit der natürlichen und/oder künstlichen Puzzolane geopolymere Bindungen entstehen, die durch $Si(OH)_4$ und $Al(OH)_4$ in Lösung eine Polykondensation ermöglichen. Dies wirkt sich in vorteilhafter Weise günstig auf die Aushärtung aus. Diese geopolymeren Bindungen können zusätzlich zu den durch aus dem Beton gelösten Aluminiumanteilen und Siliziumanteilen gebildeten geopolymeren Bindungen gebildet werden.

Nach einer günstigen Ausgestaltung der Mischung kann das Zusatzmittelgemisch wenigstens ein Fließmittel und/oder Verflüssiger und/oder Schwindreduzierer aufweisen. Durch die Fließmittel und Verflüssiger können eine Konsistenz und Thixotropie der Mischung beeinflusst werden. Durch den Schwindreduzierer können ungewollte Risse in Mischung und ein Verformen dünner Plattenelemente während des Aushärtens verhindert werden. Ein Fließmittel kann beispielsweise Glycerin oder ein Fließmittel auf Basis von Polycarboxylatethern (PCE) sein.

Weiter kann das Zusatzmittelgemisch einen Luftporenbilder und/oder ein Dichtungsmittel und/oder einen Verzögerer und/oder einen Beschleuniger und/oder eine Einpresshilfe und/oder einen Stabilisierer aufweisen.

Nach einer günstigen Ausgestaltung der Mischung kann die Zuschlagskörnung, dekorative Elemente und/oder stabilisierende Elemente, insbesondere Stahlelemente und/oder Fasern und/oder Glimmer aufweisen. Durch die dekorativen Elemente kann ein optischer Eindruck der Oberflächen der ausgehärteten Mischung in vorteilhafter Weise beeinflusst werden. Des Weiteren können Oberflächeneigenschaften wie eine Rutschfestigkeit oder auch eine Stabilität der ausgehärteten Mischung in vorteilhafter Weise positiv beeinflusst werden.

Nach einem weiteren Aspekt der Erfindung wird ein formbeständiger, zementfrei ausgehärteter Körper vorgeschlagen, der aus einer zementfrei aushärtenden Mischung gebildet ist, welche eine Zuschlagskörnung, ein Zusatzmittelgemisch und Wasser umfasst. Die Zuschlagskörnung umfasst einen alkalisch reaktiven Anteil und einen alkalisch nicht reaktiven Anteil. Die Zuschlagskörnung liegt in der Mischung mit einem Gewichtsanteil von maximal 90 Gewichts % vor und umfasst zumindest ein recycliertes, anorganisches, körniges Material, welches den alkalisch reaktiven Anteil in Form von zerkleinertem, ausgehärtetem Beton aufweist.

Das Zusatzmittelgemisch umfasst zumindest einen alkalischen Anteil, dessen Feststoffanteil in der Mischung, mit einem Gewichtsanteil von wenigstens 1,5 Gewichts %, vorliegt. Der alkalische Anteil umfasst wenigstens ein Alkalisilikat, welches reaktives Silizium für Bindungen zur Verfügung stellt, und wenigstens ein Erdalkalimetallhydroxid und/oder wenigstens Alkalimetallhydroxid, welche den alkalisch reaktiven Anteil der Zuschlagskörnung mit Erdalkalimetallhydroxiden und/oder Alkalimetallhydroxiden anreichern.

Hierbei reichern das wenigstens ein Erdalkalimetallhydroxid und/oder das wenigstens Alkalimetallhydroxid den alkalisch reaktiven Anteil der Zuschlagskörnung mit ihren negativ geladenen Ionen an. Negativ geladene Hydroxidionen (OH-) entstehen, wenn Basen mit Wasser reagieren oder sie binden selbst Wasserstoffionen aus der Dissoziation des Wassers. Der alkalische Anteil der Mischung kann durch diese Basen auf einen gewünschten Wert eingestellt werden.

Ältere, stärker carbonatisierte Betone, mit einem geringeren Basenanteil, können daher höhere Gewichtsanteile an Alkalien für eine ausreichende Anreicherung mit negativ geladenen Ionen benötigen.

In vorteilhafter Weise wird ein Aushärtungsprozess der Mischung durch den Anteil an recyclierten Beton und den alkalischen Anteil mit Alkalisilikat und Erdalkalimetallhydroxid oder mit Alkalisilikat und Alkalimetallhydroxid oder mit Alkalisilikat und Erdalkalimetallhydroxid und Alkalimetallhydroxid gesteuert. Hierbei härtet die Mischung in Abhängigkeit der Menge des zugegebenen recyclierten Betons und des alkalischen Anteils aus. Der recyclierte Beton kann zudem als Zuschlag wirken, wobei Körnungen des Betons auch verklebt werden können.

Die Mischung, aus welchem der erfindungsgemäße Körper gebildet ist, entspricht der bereits beschrieben erfindungsgemäßen Mischung. Die Zusammensetzung und die Vorteile der Zusammensetzung gelten auch für den erfindungsgemäßen Körper und werden an dieser Stelle nicht im Detail beschrieben, da auf die Zusammensetzung der Mischung und deren Vorteilte bereits eingegangen wurde.

Im alkalischen Anteil des Zusatzmittelgemischs kann der Anteil des wenigstens einen Alkalisilikats größer sein als der Anteil der anderen alkalischen Zusatzmittel. Dadurch kann im alkalischen Anteil des Zusatzmittelgemischs der Anteil des wenigstens einen Alkalimetallhydroxids geringer als der Anteil des wenigstens einen Alkalisilikats sein. Des Weiteren kann im alkalischen Anteil des Zusatzmittelgemischs der Anteil des wenigstens einen Erdalkalimetallhydroxids geringer sein als der Anteil des wenigstens einen Alkalisilikats. Zudem können im alkalischen Anteil des Zusatzmittelgemischs die Anteile des wenigstens einen Alkalimetallhydoxids und des wenigstens einen Erdalkalimetallhydroxids zusammen geringer sein, als der Anteil des wenigstens einen Alkalisilikats.

Da der Anteil des wenigstens einen Alkalimetallhydoxids und/oder des wenigstens einen Erdalkalimetallhydroxids geringer ist als der Anteil des wenigstens einen Alkalisilikats kann der pH-Wert der Mischung nicht über 13 steigen. Dadurch kann das einen längeren Zeitraum betreffende Anlösen von amorphen Silicat aus Natursteinzuschlägen, welche Teil der recyclierten Gesteinskörnung sein können, und aus den optional zusätzlich eingegebenen Natursteinkörnungen, erschwert oder ganz verhindert werden. Dadurch kann in vorteilhafter Weise eine unerwünschte Alkali-Kieselsäure-Reaktion, insbesondere im ausgehärteten Körper, vermieden werden, welche durch das volumenvergrößernde Kieselgel Schäden, beispielsweise in Form von Rissen, in der ausgehärteten, zementfreien Mischung erzeugen kann.

Da die erfindungsgemäße Mischung auch ohne klassische Bindemittel abbinden kann und zudem den primären Bedarf an klassischen Zuschlägen, wie beispielsweise Sand, Kies, Splitt, Klinker, Schamotte, Fasern reduzieren kann, können dadurch in vorteilhafter Weise Ressourcen, insbesondere endliche Ressourcen oder Ressourcen, welche nicht überall verfügbar sind, bei der Herstellung des erfindungsgemäßen Körpers eingespart werden. Dadurch kann der erfindungsgemäße Körper ressourcenschonend sein.

Die erfindungsgemäße Mischung aus Zuschlagskörnung, Wasser, und Zusatzmittel härtet nicht dadurch aus, dass eine Verklebung und Verkieselung auftritt, wie sie bei Silikatfarben bekannt ist.

Die Aushärtung erfolgt gleichmäßig im gesamten Körper, welcher sich nicht auf dünne Schichten beschränkt, insbesondere auch im Inneren des Körpers. Basis für chemische Reaktionen und den daraus resultierenden korrespondierenden chemischen Bindungen zur Aushärtung der Mischung sind die alkalisch reaktiven Anteile der Zuschlagskörnung in Kombination mit den Alkalimetallhydroxiden, Erdalkalihydroxiden und den Alkalisilikaten.

Der erfindungsgemäße Körper entspricht der in formgebrachten und ausgehärteten Mischung oder der in formgebrachten aushärtenden Mischung.

Bei dem ausgehärteten erfindungsgemäßen Körper kann es sich um Schichten auf bestehenden Oberflächen bis hin zu eigenständigen, massiven Teilen handeln.

Der erfindungsgemäße Körper kann einen Formstein, eine Skulptur, ein Sonderteil, einen Freiformkörper, eine Fliese, einen anderen geeigneten Vollkörper, ein Steinerzeugnis, eine Oberflächenschicht auf einem beliebigen Körper bzw. Untergrund, einen Wandputz, einen gegossenen Bodenbelag, eine gegossene Wand, eine gegossene Decke oder eine verfüllte Mauer ausbilden. Hierbei kann der Körper unter anderem steinartig sein, insbesondere in der Art eines Betonsteins.

Insbesondere kann der erfindungsgemäße Körper ein so genannter Vollstein sein, welcher eine Dicke aufweist, die 8 mm überschreitet.

Ferner ist denkbar, dass auf einem Erzeugnis auch eine Art Vorsatzschicht aufgebracht sein kann. Der erfindungsgemäße Körper kann die Vorsatzschicht ausbilden. Diese kann im Wesentlichen aus denselben Grundzutaten der Mischung bestehen sowie, beispielsweise für dekorative Zwecke, mit weiteren Zuschlägen und/oder Zusatzstoffen und/oder Zusatzmitteln versehen sein. Hierbei kann das Erzeugnis beispielsweise ein Betonstein und/oder ein Formstein sein, welcher einen üblichen, zementhaltigen Kernbeton und den als Vorsatzschicht ausgebildeten erfindungsgemäßen Körper aufweist.

Zudem kann ein Vollkörper mehr als zwei Schichten aufweisen. Zum Beispiel können auch eine dritte und auch weitere Schichten an einer Unter- oder Oberseite des Körpers aufgebracht sein.

Optional ist weiterhin denkbar, dass ein Formstein gebildet wird, bei dem der aus der Mischung gebildete erfindungsgemäße Körper anstelle eines üblichen Körpers aus zementhaltigen Kernbeton vorhanden ist. Auf diesem erfindungsgemäßen Körper kann ein weiterer erfindungsgemäßer Körper als Vorsatzschicht angeordnet sein oder ein Körper aus zementhaltigen Vorsatzbeton.

Der Kernbeton bildet im verlegten Zustand üblicherweise den nicht sichtbaren Teil eines Formsteins. Die Vorsatzschicht bildet im verlegten Zustand des Formsteins eine sichtbare Oberfläche des Formsteins aus. Diese Oberfläche kann beispielsweise eine Trittfläche des Formsteins sein. Alternativ kann die Vorsatzschicht bei einem Dekorstein oder einem Randstein auch wenigstens eine sichtbare Seitenfläche des Formsteins ausbilden.

Der aus der Mischung gebildete Körper kann wie ein klassischer Betonkörper Druckkräfte aufnehmen, aber keine Zug- und Biegezugkräfte. Daher weisen als gegossene Stützen aus der Mischung ausgebildete Körper eine eingebrachte Bewehrung auf. Statische Berechnungen erfolgen nach der DIN 1045-1 für Tragwerke aus Beton, Stahlbeton und Spannbeton. Für die Bewehrung von untergeordneten Bauteilen wie Estriche kann zur Reduzierung von Rissen die Zugabe von Fasern erfolgen, um Schrumpf- und Frühschwindrisse zu verringern.

In vorteilhafter Weise weist der erfindungsgemäße Körper keine klassischen Hydrat-Phasen auf. Anstelle klassischer Hydrat-Phasen kann der ausgehärtete Körper Calciumsilikatverbindungen im gesamten Körper und Calciumcarbonatverbindungen in einer für das Kohlenstoffdioxid ($CO_2$) der Umgebungsluft erreichbaren Oberflächenschicht des Körpers aufweisen. Verbindungen, welche auf der Reaktion mit Kohlenstoffdioxid ($CO_2$) beruhen, können auch im inneren des Körpers vorhanden sein, wenn Kohlenstoffdioxid ($CO_2$), beispielsweise aus der Umgebungsluft, in die Mischung eingemischt wurde.

Zudem weist der erfindungsgemäße Körper in vorteilhafter Weise in seiner einfachsten Form lediglich recycliertes, anorganisches, körniges Material, Alkalisilikat, Erdalkalimetallhydroxid und/oder Alkalimetallhydroxid und Wasser auf. Dadurch kann der Körper ein Recyclingprodukt sein, welches dem aktuellen Trend des so genannten Upcyclings entspricht. Hierbei werden umweltschonend bereits verwertete Bestandteile wiederverwertet.

Des Weiteren kann vor Ort vorhandenes Abrissmaterial oder Ausschussmaterial zur Herstellung des erfindungsgemäßen Körpers genutzt werden. Dadurch können in vorteilhafter Weise Transportwege reduziert werden, des Weiteren kann die Wiederverwertung von Ausschuss- und Abrissmaterial gefördert werden. Zudem können Kosten für Bindemittel und Zusatzstoffe und dadurch Kosten für den Körper deutlich reduziert werden.

Des Weiteren kann der erfindungsgemäße, zementfrei ausgehärtete Körper durch Zerkleinern wiederverwertet werden und dem Stoffkreislauf wieder zugeführt werden. Dadurch können aus dem erfindungsgemäßen Körper wieder zementfreie Mischungen hergestellt werden.

In vorteilhafter Weise wird für den erfindungsgemäßen Körper kein Zement und dadurch kein Zementklinker hergestellt. Dadurch können große Mengen Kohlenstoffdioxid eingespart werden.

Der erfindungsgemäße Körper kann in vorteilhafter Weise wenigstens eine wasserabweisende bzw. imprägnierte Oberfläche aufweisen. Diese kann durch das Verkieseln der Oberfläche durch Alkalisilikat bzw. klassisches Wasserglas, entstehen. Beispielsweise kann dieser Effekt durch das in die Mischung eigemischte Alkalisilikat bzw. Wasserglas, entstehen, welches nach dem Aushärten der Mischung auch ein nachträgliches Verkieseln an der Oberfläche des Körpers bewirkt. Zudem kann zusätzliches Alkalisilikat bzw. Wasserglas oder Silane, Siloxanen auf die entsprechende ausgehärtete Oberfläche aufgetragen werden, um das Verkieseln der entsprechenden Oberfläche zu ermöglichen. Des Weiteren ist das zusätzliche Aufbringen von Epoxidharzen und Acrylaten auf die entsprechende Oberfläche möglich.

Nach einer günstigen Ausgestaltung des Körpers kann ein im Drycast-Verfahren hergestellter Körper im Zuschlagsgemisch einen alkalisch reaktiven Anteil von wenigstens 10 Gewichts % umfassen. Ein im Wetcast-Verfahren hergestellter Körper kann im Zuschlagsgemisch einen alkalisch reaktiven Anteil von wenigstens 25 Gewichts % umfassen. Ein im Gießverfahren hergestellter Körper kann im Zuschlagsgemisch einen alkalisch reaktiven Anteil von wenigstens 25 Gewichts % umfassen. Vorteilhaft sind aber höhere Gewichts% des alkalisch reaktiven Anteils im Zuschlagsgemisch, beispielsweise wenigstens 45 Gewichts %, um ein schnelleres Aushärten und dadurch ein schnelleres Ausschalen zu ermöglichen.

Hierbei kann der Körper unabhängig vom Herstellungsverfahren auch im Volumen vollständig aushärten, weil genügend alkalisch reaktive Anteile zum Abbinden vorhanden sind. Hierbei giltje größer der Anteil des alkalisch reaktiven Anteils zum Abbinden in der Mischung ist, umso schneller härtet der Vollkörper gleichmäßig aus.

Nach einer günstigen Ausgestaltung des Körpers kann ein als Vorsatzschicht und/oder als auf eine andere Oberfläche aufgetragene Schicht ausgebildeter Körper eine Zuschlagskörnung mit Korngrößen zwischen 0,05 mm und 32 mm aufweisen. Hierbei können die Korngrößen so gewählt werden, dass auch optische Effekte möglich sind.

Nach einer günstigen Ausgestaltung des Körpers kann ein als Vollkörper ausgebildeter Körper eine Zuschlagskörnung mit Korngrößen zwischen 0,05 mm und 5 mm aufweisen. Bei diesen Korngrößen kann eine für Vollkörper erforderliche Biegezugfestigkeit und eine entsprechende Trittfestigkeit und entsprechende Kantenfestigkeit des Vollkörpers erreicht werden.

Nach einer günstigen Ausgestaltung des Körpers kann der Körper ein Zusatzstoffgemisch aufweisen. Hierbei können Farbpigmente einen optischen Eindruck des Körpers beeinflussen. Des Weiteren können inaktive Zusatzstoffe bzw. Füller eine Dichte und/oder Kantenstabilität des Körpers verbessern. Zudem können aktive Zusatzstoffe unter anderem mit dem alkalisch aktivierbaren Anteil des Zuschlags und/oder mit dem alkalischen Anteil des Zusatzmittelgemischs chemisch reagieren. Die korrespondierenden chemischen Bindungen können in vorteilhafter Weise zum Aushärtungsprozess des Körpers beitragen, wodurch eine Festigkeit des Körpers im ausgehärteten Zustand verbessert werden kann. Die Zusatzstoffe sind in vorteilhafter Weise optional.

Da die aktiven Zusatzstoffe bei effektiver Reaktivität und Ionenlöslichkeit geopolymere Bindungen bilden, die durch $Si(OH)_4$ und $Al(OH)_4$ in Lösung eine Polykondensation ermöglichen, kann der erfindungsgemäße Körper zusätzlich Geopolymerketten aufweisen.

Der erfindungsgemäße Körper kann diese Geopolymerketten zusätzlich zu den, durch aus dem Beton gelösten Aluminiumanteilen und Siliziumanteilen gebildeten, Geopolymerketten aufweisen.

Nach einer günstigen Ausgestaltung des Körpers kann die Mischung einen pH-Wert zwischen 11,5 und 12,6 aufweisen. Durch diesen pH-Wert kann ein gleichmäßiges Aushärten der Mischung und dadurch ein homogener und gleichmäßig ausgehärteter Körper ermöglicht werden. Die Nachteile, welche bei einem längerfristigen Anstieg des pH-Werts über 12,6 entstehen, wurden bei der Beschreibung der erfindungsgemäßen Mischung beschrieben und gelten auch für den erfindungsgemäßen Körper und werden daher an dieser Stelle nicht wiederholt.

Der pH-Wert könnte dennoch kurzzeitig über 13 steigen ansteigen, wenn für puzzolanische Reaktionen der optional zugegebenen Puzzolane Ionen ($Si_4+$, $Al_3+$) gelöst werden.

Der Körper kann auch im ausgehärteten Zustand einen pH-Wert zwischen 11,5 und 12,6 aufweisen. Dadurch kann in vorteilhafter Weise eine Bewehrung vor Korrosion geschützt werden.

Nach einem weiteren Aspekt der Erfindung wird ein Verfahren zum Herstellen einer zementfrei aushärtenden Mischung vorgeschlagen, wobei eine Zuschlagskörnung, ein Zusatzmittelgemisch und Wasser miteinander vermischt werden. Die Zuschlagskörnung umfasst einen alkalisch reaktiven Anteil und einen alkalisch nicht reaktiven Anteil. Die Zuschlagskörnung liegt in der Mischung mit einem Gewichtsanteil von maximal 90 Gewichts % vor und umfasst zumindest ein recyceltes, anorganisches, körniges Material, welches den alkalisch reaktiven Anteil in Form von zerkleinertem, ausgehärtetem Beton aufweist. Das Zusatzmittelgemisch umfasst zumindest einen alkalischen Anteil, dessen Feststoffanteil in der Mischung, mit einem Gewichtsanteil von wenigstens 1,5 Gewichts %, vorliegt.

Der alkalische Anteil umfasst wenigstens ein Alkalisilikat, welches reaktives Silizium für Bindungen zur Verfügung stellt, und wenigstens ein Erdalkalimetallhydroxid und/oder wenigstens ein Alkalimetallhydroxid, welche den alkalisch reaktiven Anteil der Zuschlagskörnung mit Erdalkalimetallhydroxiden und/oder Alkalimetallhydroxiden anreichern.

Hierbei reichern das wenigstens ein Erdalkalimetallhydroxid und/oder das wenigstens Alkalimetallhydroxid den alkalisch reaktiven Anteil der Zuschlagskörnung mit ihren negativ geladenen Ionen an. Negativ geladene Hydroxidionen (OH-) entstehen, wenn Basen mit Wasser reagieren oder sie binden selbst Wasserstoffionen aus der Dissoziation des Wassers. Der alkalische Anteil der Mischung kann durch diese Basen auf einen gewünschten Wert eingestellt werden. Ältere, stärker carbonatisierte Betone, mit einem geringeren Basenanteil, können daher höhere Gewichtsanteile an Alkalien für eine ausreichende Anreicherung mit negativ geladenen Ionen benötigen.

In vorteilhafter Weise wird ein Aushärtungsprozess der Mischung durch den Anteil zugegebenen recyclierten Beton und den zugegebenen alkalischen Anteil mit Alkalisilikat und Erdalkalimetallhydroxid oder mit Alkalisilikat und Alkalimetallhydroxid oder mit Alkalisilikat und Erdalkalimetallhydroxid und Alkalimetallhydroxid gesteuert. Die Mischung härtet in Abhängigkeit der Menge des zugegebenen recyclierten Betons und des zugegebenen alkalischen Anteils aus. Der recyclierte Beton kann zudem als Zuschlag wirken, wobei Körnungen des Betons auch verklebt werden können.

Im alkalischen Anteil des Zusatzmittelgemischs kann der Anteil des wenigstens einen Alkalisilikats größer sein als der Anteil der anderen alkalischen Zusatzmittel. Dadurch kann im alkalischen Anteil des Zusatzmittelgemischs der Anteil des wenigstens einen Alkalimetallhydroxids geringer sein als der Anteil des wenigstens einen Alkalisilikats. Des Weiteren kann im alkalischen Anteil des Zusatzmittelgemischs der Anteil des wenigstens einen Erdalkalimetallhydroxids geringer sein als der Anteil des wenigstens einen Alkalisilikats. Zudem können im alkalischen Anteil des Zusatzmittelgemischs die Anteile des wenigstens einen Alkalimetallhydoxids und des wenigstens einen Erdalkalimetallhydroxids zusammen geringer sein als der Anteil des wenigstens einen Alkalisilikats.

Da der Anteil des wenigstens einen Alkalimetallhydoxids und/oder des wenigstens einen Erdalkalimetallhydroxids geringer ist als der Anteil des wenigstens einen Alkalisilikats kann der pH-Wert der Mischung nicht über 13 steigen. Dadurch kann das einen längeren Zeitraum betreffende Anlösen von amorphen Silicat aus Natursteinzuschlägen, welche Teil der recyclierten Gesteinskörnung sein können, und aus den optional zusätzlich eingegebenen Natursteinkörnungen, erschwert oder ganz verhindert werden.

Dadurch kann in vorteilhafter Weise eine unerwünschte Alkali-Kieselsäure-Reaktion, insbesondere im ausgehärteten Körper, vermieden werden, welche durch das volumenvergrößernde Kieselgel Schäden, beispielsweise in Form von Rissen, in der ausgehärteten, zementfreien Mischung erzeugen kann.

Die Mischung, welche durch das Verfahren hergestellt wird, entspricht der bereits beschrieben erfindungsgemäßen Mischung. Die Zusammensetzung und die Vorteile der Zusammensetzung und die daraus resultierenden chemischen Reaktionen gelten auch für das Verfahren zum Herstellen der zementfrei aushärtenden Mischung und werden an dieser Stelle nicht im Detail beschrieben, da auf die Zusammensetzung und die chemischen Reaktionen der Mischung und deren Vorteilte bereits eingegangen wurde.

Da die erfindungsgemäße Mischung auch ohne klassische Bindemittel abbinden kann und zudem den primären Bedarf an klassischen Zuschlägen, wie beispielsweise Sand, Kies, Splitt, Klinker, Schamotte, Fasern reduzieren kann, können dadurch in vorteilhafter Weise Ressourcen, insbesondere endliche Ressourcen oder Ressourcen, welche nicht überall verfügbar sind, bei der erfindungsgemäßen Herstellung der Mischung eingespart werden.

Die Zuschlagskörnung kann vor dem Vermischen der Zuschlagskörnung mit dem Zusatzmittelgemisch und Wasser vorbereitet werden. Hierbei können der alkalisch reaktive Anteil und ein alkalisch nicht reaktiver Anteil miteinander vermischt werden, wenn diese getrennt vorliegen. Weist das recyclierte, anorganische, körnige Material einen alkalisch reaktiven Anteil und einen alkalisch nicht reaktiven Anteil auf, kann auf das vermischen dieser Anteile verzichtet werden.

Alternativ können weitere alkalisch reaktive Anteile und/oder alkalisch nicht reaktive Anteile der Zuschlagskörnung zugegeben werden. Liegt das recyclierte, anorganische Material in größeren Stücken vor, können diese durch geeignete Verfahren zerkleinert und gesiebt werden.

Alternativ können die Anteile der Zuschlagskörnung, ohne vorher miteinander vermischt zu werden, mit dem Zusatzmittelgemisch und dem Wasser vermischt werden.

Das Zusatzmittelgemisch kann vor dem Vermischen der Zuschlagskörnung mit dem Zusatzmittelgemisch und Wasser vorbereitet werden. Hierbei können die alkalischen Anteile, beispielsweise durch geeignete Verfahren, gelöst werden. Ein Mischen der alkalischen Anteile miteinander ist sowohl in Lösung als auch im trockenen Zustand möglich. Alternativ können die alkalischen Anteile im geeigneten Zustand der Mischung zugegeben werden, ohne vorher miteinander vermischt zu werden.

Das Vermischen der Zuschlagskörnung mit dem Zusatzmittelgemisch und Wasser findet in vorteilhafter Weise an Luft statt. Dadurch kann sichergestellt werden, dass Kohlenstoffdioxid ($CO_2$) für einige der chemischen Reaktionen zur Verfügung steht.

Wie beim Mischen von Beton wird zuerst die gemischte Zuschlagskörnung oder Komponenten der Zuschlagskörnung in eine geeignete Mischanordnung gegeben. Anschließend werden trockene Pulver, beispielsweise die trockenen Zusatzmittel und/oder trockene optionale Zusatzstoffe und/oder pulverförmiger Zuschlag hinzugefügt. Während des Mischens der trockenen Komponenten werden die wässrigen Komponenten, beispielswiese wässrige Zusatzmittel und/oder optionale wässrige Zusatzstoffe und/oder Zugabewasser, hinzugefügt, um eine gleichmäßige Mischung zu erhalten.

Ein weiteres Zusatzmittel kann ein Fließmittel sein, welches die Konsistenz und Thixotropie der Mischung beeinflusst. Dadurch kann die Konsistenz und Thixotropie der Mischung an verschiedene Verfahren angepasst werden, ohne den pH-Wert zu verändern.

Der Zuschlagskörnung können dekorative Elemente und/oder stabilisierende Elemente, insbesondere Stahlelemente und/oder Fasern und/oder Glimmer, zugegeben werden. Mit den Korngrößen der Zuschlagskörnung kann die Biegezugfestigkeit der ausgehärteten Mischung und/oder die Reaktionsfähigkeit der Mischung beeinflusst werden.

Nach einer günstigen Ausgestaltung des Verfahrens kann der pH-Wert zwischen 11,5 und 12,6 gehalten werden. Der pH-Wert kann während des Verfahrens durch geeignete Methoden kontrolliert werden. Gegebenenfalls kann der pH-Wert der Mischung bei Bedarf durch Zugabe von alkalischen Anteilen erhöht, oder durch Zugabe von Wasser oder nicht alkalisch reaktiven Anteilen reduziert werden.

Die Nachteile, welche bei einem längerfristigen Anstieg des pH-Werts über 12,6 entstehen, wurden bei der Beschreibung der erfindungsgemäßen Mischung beschrieben und gelten auch für das erfindungsgemäßen Herstellungsverfahren dieser Mischung und werden daher an dieser Stelle nicht wiederholt.

Der pH-Wert könnte dennoch kurzzeitig über 13 ansteigen, wenn für puzzolanische Reaktionen der optional zugegebenen Puzzolane Ionen ($Si_4+$, $Al_3+$) gelöst werden.

Nach einer günstigen Ausgestaltung des Verfahrens kann zusätzlich zur Zuschlagskörnung, dem Zusatzmittelgemisch und Wasser ein Zusatzstoffgemisch eingegeben werden. Das Zusatzstoffgemisch besteht in einer Ausführung der Erfindung aus einem inaktiven Zusatzstoff oder aus mehreren inaktiven Zusatzstoffen. Alternativ kann das Zusatzstoffgemisch aus aktiven Zusatzstoffen bestehen. Alternativ kann das Zusatzstoffgemisch aus aktiven und aus inaktiven Zusatzstoffen bestehen. Werden aktive Zusatzstoffe zugeben, kann die Aushärtung der Mischung beeinflusst werden. Werden inaktive Zusatzstoffe zugeben, kann die Dichte und/oder die Aushärtung der Mischung beeinflusst werden. Weitere inaktive oder aktive Zusatzstoffe können einen Einfluss auf die Farbe der Mischung haben. Beispielsweise können durch geeignete Farbpigmente verschiedene Farbtöne erreicht werden. Meta-Kaolin kann eine Weißfärbung bewirken, während Trass eine Graufärbung bewirken kann.

Bei dem erfindungsgemäßen Verfahren können bei effektiver Reaktivität und Ionenlöslichkeit die aktiven Zusatzstoffe geopolymere Bindungen ausbilden, die durch $Si(OH)_4$ und $Al(OH)_4$ in Lösung eine Polykondensation ermöglichen. Dies wirkt sich somit günstig auf die Aushärtung aus.

Diese geopolymeren Bindungen können zusätzlich zu den durch aus dem Beton gelösten Aluminiumanteilen und Siliziumanteilen gebildeten geopolymeren Bindungen gebildet werden.

Nach einem weiteren Aspekt der Erfindung wird ein Verfahren zum Herstellen eines formbeständigen, zementfrei ausgehärteten Körpers vorgeschlagen, wobei der Körper aus einer zementfrei ausgehärteten Mischung gebildet wird, wobei Komponenten der Mischung mit einander vermischt werden, wobei die Mischung eine Zuschlagskörnung, ein Zusatzmittelgemisch und Wasser umfasst. Die Zuschlagskörnung umfasst einen alkalisch reaktiven Anteil und einen alkalisch nicht reaktiven Anteil. Die Zuschlagskörnung liegt in der Mischung mit einem Gewichtsanteil von maximal 90 Gewichts % vor und umfasst zumindest ein recycliertes, anorganisches, körniges Material, welches den alkalisch reaktiven Anteil in Form von zerkleinertem, ausgehärtetem Beton aufweist.

Das Zusatzmittelgemisch umfasst zumindest einen alkalischen Anteil, dessen Feststoffanteil in der Mischung, mit einem Gewichtsanteil von wenigstens 1,5 Gewichts %, vorliegt. Der alkalische Anteil umfasst wenigstens ein Alkalisilikat, welches reaktives Silizium für Bindungen zur Verfügung stellt, und wenigstens ein Erdalkalimetallhydroxid und/oder wenigstens ein Alkalimetallhydroxid, welche den alkalisch reaktiven Anteil der Zuschlagskörnung mit Erdalkalimetallhydroxiden und/oder Alkalimetallhydroxiden anreichern.

Hierbei reichern das wenigstens eine Erdalkalimetallhydroxid und/oder das wenigstens eine Alkalimetallhydroxid den alkalisch reaktiven Anteil der Zuschlagskörnung mit ihren negativ geladenen Ionen an. Negativ geladene Hydroxidionen (OH-) entstehen, wenn Basen mit Wasser reagieren oder sie binden selbst Wasserstoffionen aus der Dissoziation des Wassers. Der alkalische Anteil der Mischung kann durch diese Basen auf einen gewünschten Wert eingestellt werden. Ältere, stärker carbonatisierte Betone, mit einem geringeren Basenanteil, können daher höhere Gewichtsanteile an Alkalien für eine ausreichende Anreicherung mit negativ geladenen Ionen benötigen.

Ein aus der erfindungsgemäßen Mischung gebildeter Körper weist Erdalkalisilikatverbindungen und/oder Alkalisilikatverbindungen, beispielsweise Calciumsilikatverbindungen, im gesamten Körper auch in tieferen Bereichen und im Kern des Körpers auf. Diese Erdalkalisilikatverbindungen und/oder Alkalisilikatverbindungen können hauptsächlich zum Aushärtungsprozess beitragen.

Zudem weist ein solcher Körper Calciumcarbonatverbindungen in Bereichen auf, welche mit Kohlenstoffdioxid ($CO_2$) in Kontakt kommen. Hierbei kann Kohlenstoffdioxid ($CO_2$) in der trockenen und/oder erdfeuchten Gesteinskörnung eingemischt sein. Zudem kann eine für Kohlenstoffdioxid ($CO_2$) der Umgebungsluft erreichbare Oberflächenschicht des Körpers Calciumcarbonatverbindungen aufweisen.

Der Körper, welcher durch das Verfahren hergestellt wird, entspricht dem bereits beschrieben erfindungsgemäßen Körper. Zudem entspricht die verwendete Mischung der bereits beschriebenen erfindungsgemäßen Mischung. Die Zusammensetzung und die Vorteile der Zusammensetzung und die daraus resultierenden chemischen Reaktionen gelten auch für das Verfahren zum Herstellen des zementfrei aushärtenden Körpers, und werden an dieser Stelle nicht im Detail beschrieben, da auf die Zusammensetzung und die chemischen Reaktionen der Mischung und deren Vorteile bereits eingegangen wurde.

Da die erfindungsgemäße Mischung auch ohne klassische Bindemittel abbinden kann und zudem den primären Bedarf an klassischen Zuschlägen, wie beispielsweise Sand, Kies, Splitt, Klinker, Schamotte, Fasern, reduzieren kann, können dadurch in vorteilhafter Weise Ressourcen, insbesondere endliche Ressourcen oder Ressourcen, welche nicht überall verfügbar sind, bei der erfindungsgemäßen Herstellung des Körpers eingespart werden.

In vorteilhafter Weise wird ein Aushärtungsprozess der Mischung durch den Anteil an recyclierten Beton und den alkalischen Anteil mit Alkalisilikat und Erdalkalimetallhydroxid oder mit Alkalisilikat und Alkalimetallhydroxid oder mit Alkalisilikat und Erdalkalimetallhydroxid und Alkalimetallhydroxid gesteuert. Die Mischung härtet in Abhängigkeit der Menge des zugegebenen recyclierten Betons und des alkalischen Anteils aus. Der recyclierte Beton kann zudem als Zuschlag wirken, wobei Körnungen des Betons auch verklebt werden können.

Das Vermischen der Zuschlagskörnung mit dem Zusatzmittelgemisch und Wasser findet in vorteilhafter Weise an Luft statt. Dadurch kann sichergestellt werden, dass Kohlenstoffdioxid ($CO_2$) für einige der chemischen Reaktionen zur Verfügung steht.

Wie beim Mischen von Beton wird zuerst die gemischte Zuschlagskörnung oder Komponenten der Zuschlagskörnung in eine geeignete Mischanordnung gegeben. Anschließend werden trockene Pulver, beispielsweise die trockenen Zusatzmittel und/oder trockene optionale Zusatzstoffe und/oder pulverförmiger Zuschlag hinzugefügt. Während des Mischens der trockenen Komponenten werden die wässrigen Komponenten, beispielsweise wässrige Zusatzmittel und/oder optionale wässrige Zusatzstoffe und/oder Zugabewasser, hinzugefügt, um eine gleichmäßige Mischung zu erhalten.

Ein weiteres Zusatzmittel kann ein Fließmittel sein, welches die Konsistenz und Thixotropie der Mischung beeinflusst. Dadurch kann die Konsistenz und Thixotropie der Mischung an verschiedene Verfahren angepasst werden, ohne den pH-Wert zu verändern.

Die Zuschlagskörnung kann dekorative Elemente und/oder stabilisierende Elemente, insbesondere Stahlelemente und/oder Fasern und/oder Glimmer, aufweisen. Mit den Korngrößen der Zuschlagskörnung die Biegezugfestigkeit der ausgehärteten Mischung und/oder die Reaktionsfähigkeit der Mischung beeinflusst werden.

Der erfindungsgemäße Körper kann in vorteilhafter Weise wenigstens eine wasserabweisende bzw. imprägnierte Oberfläche aufweisen. Diese kann im Herstellungsverfahren durch das Verkieseln der Oberfläche durch Alkalisilikat bzw. klassisches Wasserglas, entstehen. Beispielsweise kann dieser Effekt durch das in die Mischung eigemischte Alkalisilikat bzw. Wasserglas, entstehen, welches nach dem Aushärten der Mischung auch ein nachträgliches Verkieseln bewirkt. Zudem kann zusätzliches Alkalisilikat bzw. Wasserglas oder Silane, Siloxanen auf die entsprechende ausgehärtete Oberfläche aufgetragen werden, um das Verkieseln der entsprechenden Oberfläche zu ermöglichen. Des Weiteren ist das zusätzliche Aufbringen von Epoxidharzen und Acrylaten auf die entsprechende Oberfläche möglich.

Zum Herstellen des Körpers ist ein Drycast-Verfahren, ein Hermetikpressverfahren, ein Wetcast-Verfahren oder ein selbstverdichtendes Aushärten vorstellbar.

Nach einer günstigen Ausgestaltung des Verfahrens kann der pH-Wert der Mischung zwischen 11,5 und 12,6 gehalten werden. Der pH-Wert kann während des Verfahrens durch geeignete Methoden kontrolliert werden. Gegebenenfalls kann der pH-Wert der Mischung bei Bedarf durch Zugabe von alkalischen Anteilen erhöht, oder durch Zugabe von Wasser oder nicht alkalisch reaktiven Anteilen reduziert werden.

Die Nachteile, welche bei einem längerfristigen Anstieg des pH-Werts über 12,6 entstehen, wurden bei der Beschreibung der erfindungsgemäßen Mischung beschrieben und gelten auch für das erfindungsgemäße Herstellungsverfahren des Körpers und werden daher an dieser Stelle nicht wiederholt.

Der pH-Wert könnte dennoch kurzzeitig über 13 steigen ansteigen, wenn für puzzolanische Reaktionen der optional zugegebenen Puzzolane Ionen ($Si_4+$, $Al_3+$) gelöst werden.

Nach einer günstigen Ausgestaltung des Verfahrens kann die Mischung auf eine Oberfläche aufgetragen werden. Beispielsweise kann die Mischung auf die Oberfläche bzw. auf einen Untergrund gegossen und/oder gespritzt oder anderweitig auf der Oberfläche bzw. dem Untergrund verteilt werden. Dadurch kann in vorteilhafter Weise ein als Schicht ausgebildeter Körper hergestellt werden, beispielsweise ein Putz und/oder ein Estrich und/oder eine Vorsatzschicht. Zusätzlich oder alternativ kann die Mischung in eine Form gegeben werden. Die Mischung kann in die Form gegossen oder in anderer geeigneter Art und Weise in die Form gegeben werden. Die Form kann zuvor mit einem Trennmittel bearbeitet werden. Durch die Form können in vorteilhafter Weise Vollkörper mit den unterschiedlichsten Formen hergestellt werden. Das Auftragen von mehreren Schichten ist ebenfalls möglich.

Nach einer günstigen Ausgestaltung des Verfahrens kann die Mischung mittels Vibration und/oder Rütteln und/oder Schütteln und/oder mittels Stempeln verdichtet und anschließend ausgehärtet werden. Die Verdichtung kann durch alleiniges Vibrieren oder Schütteln oder Rütteln einer Form oder durch Stempeln mittels eine Stempels, welcher auf die Oberfläche der in der Form angeordneten Mischung gedrückt wird oder durch eine Kombination der genannten Methoden erfolgen. Die oben liegende Mischung ist in der Regel die zuletzt eingefüllte oder aufgetragene Mischung.

In einer Form können auch unterschiedliche Mischungen eingefüllt werden. Beispielsweise können sich die Mischungen in den verwendeten Korngrößen und/oder Konsistenz unterscheiden. Zudem kann sich eine als Vorsatzbetonmischung ausgebildete Mischung von einer als Kernbetonmischung ausgebildeten Mischung durch das Vorhandensein von dekorativen Zuschlägen unterscheiden. Zusätzlich oder alternativ kann die Mischung selbstverdichtend aushärten. Hierbei ist ein Rütteln und/oder Schütteln und/oder Pressen und/oder stempeln nicht erforderlich, so dass die Mischung sich gut für Wandbelege eignen kann.

Nach einer günstigen Ausgestaltung des Verfahrens kann die Mischung unter Lufteinfluss aushärten. Durch das vorhandene Kohlenstoffdioxid, können die Oberflächen in vorteilhafter aushärten und weiter verdichten.

**Zeichnung**

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen beispielhaft:

Fig. 1     eine Blockdarstellung eines ersten Ausführungsbeispiels der erfindungsgemäßen Mischung;

Fig. 2     eine Blockdarstellung eines zweiten Ausführungsbeispiels der erfindungsgemäßen Mischung;

Fig. 3     eine Blockdarstellung eines dritten Ausführungsbeispiels der erfindungsgemäßen Mischung;

Fig. 4     eine perspektivische Darstellung eines erfindungsgemäßen Körpers

Fig. 5     eine Schnittdarstellung eines erfindungsgemäßen Körpers auf einem Untergrund;

Fig. 6     eine Blockdarstellung eines erfindungsgemäßen Verfahrens zum Herstellen einer zementfrei aushärtenden Mischung; und

Fig. 7     eine Blockdarstellung eines erfindungsgemäßen Verfahrens zum Herstellen eines formbeständigen zementfreien ausgehärteten Körpers.

**Ausführungsformen der Erfindung**

Die hier verwendeten Begriffe sind lediglich dafür bestimmt besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas anderes deutlich macht.

Die beschriebenen Komponenten und Elemente, deren Auslegung und Verwendung können im Sinne der Überlegungen eines Fachmanns variieren und an die jeweiligen Anwendungen angepasst werden.

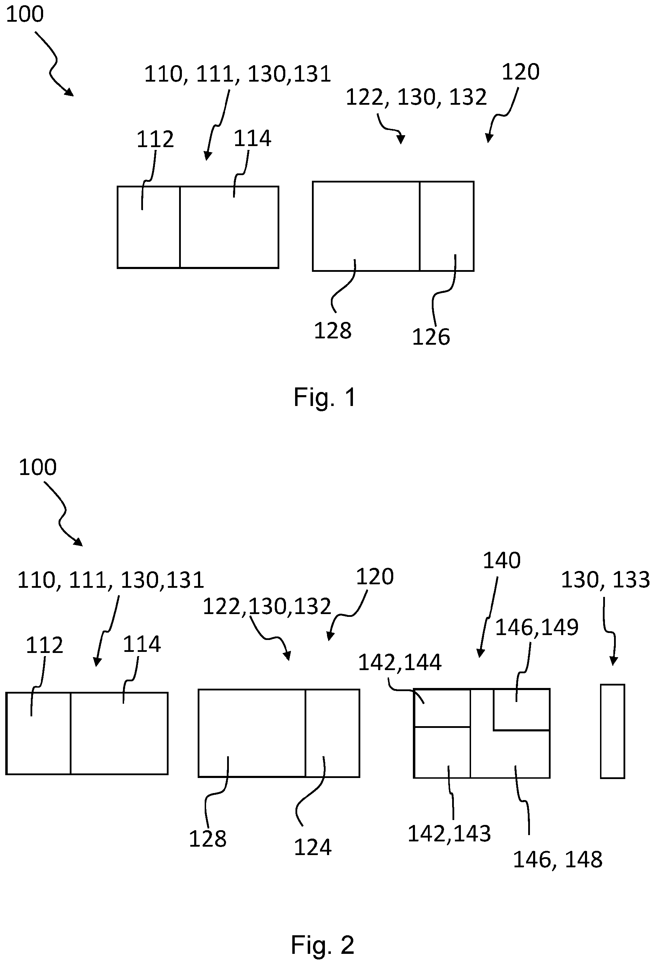

Das in Figur 1 dargestellte erste Ausführungsbeispiel der erfindungsgemäßen Mischung 100 ist die Zusammensetzung mit den wenigsten Komponenten.

Das in Figur 1 dargestellte erste Ausführungsbeispiel der erfindungsgemäßen Mischung 100 besteht aus einer Zuschlagskörnung 110, einem Zusatzmittelgemisch 120 und Wasser 130.

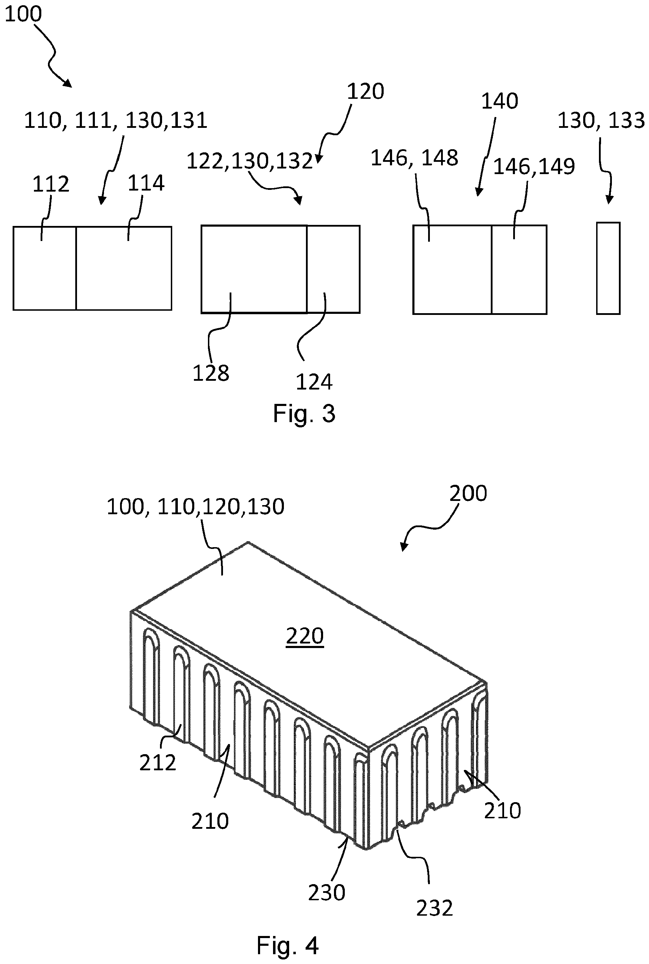

Das in Figur 2 dargestellte zweite Ausführungsbeispiel und das in Figur 3 dargestellte dritte Ausführungsbeispiel der erfindungsgemäßen Mischung 100 umfasst eine Zuschlagskörnung 110, ein Zusatzmittelgemisch 120 und Wasser 130. Zusätzlich umfassen das zweite Ausführungsbeispiel und das dritte Ausführungsbeispiel ein Zusatzstoffgemisch 140.

Im Folgenden wird auf die Gemeinsamkeiten der Ausführungsbeispiele der erfindungsgemäßen Mischung 100 eingegangen.

Die Zuschlagskörnung 110 liegt in der erfindungsgemäßen Mischung 100 mit einem Gewichtsanteil von maximal 90 Gewichts % vor. In den dargestellten Ausführungsbeispielen der Mischung 100 weist die Zuschlagskörnung 110 eine Eigenfeuchte 131 von ca. 4% auf, welche einen Anteil des Wassers 130 in der Mischung 100 ausmacht. Die Eigenfeuchte 131 ist unteranderem abhängig von der Lagerung und der Beschaffungsquelle der Zuschlagskörnung 110.

Die Zuschlagskörnung 110 umfasst einen alkalisch reaktiven Anteil 112 und einen alkalisch nicht reaktiven Anteil 114. Der alkalisch reaktiven Anteil 112 liegt in Form von zerkleinertem, ausgehärtetem Beton vor. In den dargestellten Ausführungsbeispielen der Mischung 100 umfasst die Zuschlagskörnung 110 ausschließlich ein recycliertes, anorganisches, körniges Material 111 insbesondere eine recyclierte Gesteinskörnung nach der DIN EN 12620 mit einem Betonanteil, welcher den reaktiven Anteil 112 ausbildet. Bei bekannter Quelle ist eine recyclierte Gesteinskörnung vorstellbar, in welcher der alkalisch reaktive Anteil 112 in Form von Betonsplitt oder anderem zerkleinerten Beton wenigstens 99 Gewichts % ausmacht.

Dadurch macht der alkalisch reaktive Anteil 112 auch in der Zuschlagskörnung 110 einen Anteil von wenigstens 99 Gewichts % aus. Der alkalisch nicht reaktive Anteil 114 ist hierbei minimal. Es sind auch recyclierte Gesteinskörnungen vorstellbar, welche außer dem Betonanteil, welcher den reaktiven Anteil 112 ausbildet, weitere Bestandteile aufweist, so dass der reaktive Anteil 112 in der Zuschlagskörnung 110 geringer ist.

In einem anderen nicht dargestellten Ausführungsbeispiel macht, der alkalisch reaktive Anteil 112 der Zuschlagskörnung 110, wenigstens 10 Gewichts % der Mischung 100 aus. Hierbei kann die Zuschlagskörnung 110 neben dem recyclierten, anorganischen, körnigen Material 111 auch weitere nicht reaktive Anteile 114, wie Sand, Splitt, gebrannten Klinker, Schamotte oder ähnliches aufweisen.

Des Weiteren kann der alkalisch reaktive Anteil 112 jeden Wert zwischen den beiden genannten Extremwerten aufweisen.

Das Zusatzmittelgemisch 120 umfasst zumindest einen alkalischen Anteil 122, dessen Feststoffanteil in der Mischung 100 mit einem Gewichtsanteil von wenigstens 1,5 Gewichts % vorliegt. Der alkalischen Anteil 122 kann sowohl als Feststoff als auch als wässrige Lösung vorliegen. Als wässrige Lösung kann der alkalische Anteil 122 zudem wenigstens 10 Gewichts % der Mischung ausmachen. Zudem können Komponenten des alkalischen Anteils 122 sowohl als Feststoff als auch als wässrige Lösung vorliegen. Als wässrige Lösung macht das Lösungswasser 132 einen Anteil des Wassers 130 in der Mischung 100 aus.

Der alkalische Anteil 122 umfasst im zweiten Ausführungsbeispiel und im dritten Ausführungsbeispiel wenigstens ein Alkalisilikat 128, welches reaktives Silizium für Bindungen zur Verfügung stellt, und wenigstens ein Erdalkalimetallhydroxid 124. Im ersten Ausführungsbeispiel der Mischung 100 umfasst der alkalische Anteil 122 wenigstens ein Alkalisilikat 128 und wenigstens ein Alkalimetallhydroxid 126. Es ist auch vorstellbar, dass das erste Ausführungsbeispiel anstelle des wenigstens einem Alkalimetallhydroxids 126 wenigstens ein Erdalkalimetallhydroxid 124 aufweist. Zudem ist vorstellbar, dass das zweite Ausführungsbeispiel und das dritte Ausführungsbeispiel anstelle des wenigstens einem Erdalkalimetallhydroxids 124 wenigstens ein Alkalimetallhydroxid 126 aufweisen.

In einem alternativen nicht dargestellten Ausführungsbeispiel kann der alkalische Anteil 122 wenigstens ein Alkalisilikat 128 und wenigstens ein Erdalkalimetallhydroxid 124 und wenigstens Alkalimetallhydroxid 126 aufweisen.

Das wenigstens eine Alkalimetallhydroxid 126 reichert den alkalisch reaktiven Anteil 112 der Zuschlagskörnung 110 mit Alkalimetallhydroxiden 126 an. Das wenigstens eine Erdalkalimetallhydroxid 124 reichert den alkalisch reaktiven Anteil 112 der Zuschlagskörnung 110 mit Erdalkalimetallhydroxiden 124 an.

Hierbei reichern das wenigstens ein Erdalkalimetallhydroxid 124 und/oder das wenigstens Alkalimetallhydroxid 126 den alkalisch reaktiven Anteil 112 der Zuschlagskörnung 110 mit ihren negativ geladenen Ionen an. Negativ geladene Hydroxidionen (OH-) entstehen, wenn Basen mit Wasser reagieren oder sie binden selbst Wasserstoffionen aus der Dissoziation des Wassers. Der alkalische Anteil 122 des Zusatzmittelgemischs 120 kann durch diese Basen auf einen gewünschten Wert eingestellt werden.

Ältere, stärker carbonatisierte Betone der Zuschlagskörnung 110, mit einem geringeren Basenanteil, können daher höhere Gewichtsanteile an Alkalien 124, 126, 122 für eine ausreichende Anreicherung mit negativ geladenen Ionen benötigen als jüngere weniger carbonatisierte Betone.

In den dargestellten Ausführungsbeispielen weist das Zusatzmittelgemisch 120 lediglich den alkalischen Anteil 122 auf. In einem alternativen nicht dargestellten Ausführungsbeispiel kann das Zusatzmittelgemisch 120 neben dem alkalischen Anteil 122 weitere Komponenten aufweisen.

Im dargestellten ersten Ausführungsbeispiel liegt das Alkalimetallhydroxid 126 in Form einer 45% Kalilauge vor. Hierbei weist ein Liter Kalilauge bei 20°C 450 g trockenes Kaliumoxid ($K_2O$) auf.

Bevorzugt wird eine Kaliumhydroxidlösung mit der Reinheit von 44-46 Gewichts %, einer bekannten Molmasse von 56,11 g/mol für $K_2O$ verwendet. Die Stoffmengenkonzentration liegt bei 11,5898 mol/Liter.

In dargestellten ersten Ausführungsbeispiel liegt das Alkalisilikat 128 als Alkalisilikatlösung vor, welche gemessen bei 20°C, eine Dichte von 1,24 - 1,26 g/cm$^3$ aufweist. Die Alkalisilikatlösung, liegt im dargestellten ersten Ausführungsbeispiel mit den spezifischen Eigenschaften K$_2$O 7,8 - 8,8 Gewichts-% und SiOz mit 20,3 - 21,4 Gewichts %, mit einem Gewichtsverhältnis von 2,4 - 2,6 und einem Molverhältnis mol SiO$_2$ / mol K$_2$O von 3,92 - 4,08 und einer Viskosität von 20 - 70 mPas. vor.

Im dargestellten ersten Ausführungsbeispiel liegt das Alkalisilikat 128 in Form von Kaliwasserglas 28/30 vor, welche 8 Gewichts % Kaliumoxid (K$_2$O) und 20,8 Gewichts % Siliziumoxid (SiOz) aufweist. Dadurch weist ein Liter Kaliwasserglas bei 20°C 100g trockenes Kaliumoxid K$_2$O und 260 g trockenes Siliziumoxid SiO$_2$ auf.

Im ersten Ausführungsbeispiel liegen das wenigstens eine Alkalisilikat 128 in der beschriebenen Lösung und das wenigstens eine Alkalimetallhydroxid 126 in der beschriebenen Lösung in einem Verhältnis von 5:1 bis 20:1 im alkalischen Anteil 122 des Zusatzmittelgemischs 120 vor.

Im zweiten Ausführungsbeispiel und im dritten Ausführungsbeispiel und in weiteren nicht dargestellten alternativen Ausführungsbeispielen sind andere Lösungen des alkalischen Anteils 122 mit anderen Feststoff/Wasseranteilen und anderen Molverhältnissen vorstellbar, wodurch sich ein anderes Verhältnis dieser Lösungen ergibt. Dieses Verhältnis kann empirisch und/oder rechnerisch ermittelt werden.

Das in Figur 1 dargestellte erste Ausführungsbeispiel der Mischung 100 unterscheidet sich von dem in Figur 2 dargestellten zweiten Ausführungsbeispiel und dem in Figur 3 dargestellten dritten Ausführungsbeispiel der Mischung 100 dadurch, dass das zweite Ausführungsbeispiel und das dritte Ausführungsbeispiel der Mischung 100 zusätzlich ein Zusatzstoffgemisch 140 und Zugabewasser 133 aufweisen. Zudem weist das erste Ausführungsbeispiel der Mischung 100 im alkalischen Anteil 122, ein Alkalimetallhydroxid 126 auf und das zweite Ausführungsbeispiel der Mischung 100 weist im alkalischen Anteil 122, ein Erdalkalimetallhydroxid 124 auf.

Es sind auch Ausführungen der Mischung 100 vorstellbar, wobei beispielsweise das erste Ausführungsbeispiel zusätzlich Zugabewasser 133 aufweist, oder das zweite Ausführungsbeispiel oder das dritte Ausführungsbeispiel kein Zugabewasser 133 aufweisen.

Im ersten Ausführungsbeispiel der Mischung 100 ist im alkalischen Anteil 122 des Zusatzmittelgemischs 120 der Anteil des wenigstens einen Alkalimetallhydroxids 126 geringer als der Anteil des wenigstens einen Alkalisilikats 128. Im zweiten Ausführungsbeispiel und im dritten Ausführungsbeispiel der Mischung 100 ist im alkalischen Anteil 122 des Zusatzmittelgemischs 120 der Anteil des wenigstens einen Erdalkalimetallhydroxids 124 geringer sein als der Anteil des wenigstens einen Alkalisilikats 128. In einem alternativen, nicht dargestellten Ausführungsbeispiel sind im alkalischen Anteil 122 des Zusatzmittelgemischs 120 die Anteile des wenigstens einen Alkalimetallhydroxids 126 und des wenigstens einen Erdalkalimetallhydroxids 124 zusammen geringer als der Anteil des wenigstens einen Alkalisilikats 128.

Die Anteile 112, 114 der Zuschlagskörnung 110 weisen in allen Ausführungsbeispielen Korngrößen zwischen 0,05 mm und 32 mm auf.

Das Wasser 130 liegt in den dargestellten Ausführungsbeispielen der Mischung 100 in Form von Eigenfeuchte 131 der Zuschlagskörnung 110 und als Lösungswasser 132 im Zusatzmittelgemisch 120 vor. Im zweiten und dritten Ausführungsbeispiel liegt Wasser 130 zusätzlich in Form von Zugabewasser 133 vor.

In einem alternativen nicht dargestellten Ausführungsbeispiel der Mischung 100 kann das Wasser 130 lediglich in Form von Eigenfeuchte 131 oder lediglich in Form von Lösungswasser 132 oder lediglich in Form von Zugabewasser 133 vorliegen. Des Weiteren sind Kombinationen der genannten Wasseranteile 131, 132, 133 vorstellbar. Das Wasser 130 liegt in den dargestellten Ausführungsbeispielen mit einem Gewichtsanteil zwischen 3 und 40 Gewichts % vor.

Das in Figur 2 dargestellte zweite Ausführungsbeispiel der Mischung 100 umfasst ein Zusatzstoffgemisch 140, welches in der Mischung 100 mit einem Gewichtsanteil von maximal 40 Gewichts % vorliegt. Das Zusatzstoffgemisch 140, umfasst wenigstens einen aktiven Zusatzstoff 142, welcher latent hydraulisch und/oder puzzolanisch ist. Zudem umfasst das Zusatzstoffgemisch 140 einen inaktiven Zusatzstoff 146.

Das in Figur 3 dargestellte dritte Ausführungsbeispiel der Mischung 100 umfasst ein Zusatzstoffgemisch 140, welches in der Mischung 100 mit einem Gewichtsanteil von maximal 40 Gewichts % vorliegt. Das Zusatzstoffgemisch 140, umfasst wenigstens einen inaktiven Zusatzstoff 146 und keine aktiven Zusatzstoffe 142.

In einem alternativen nicht dargestellten Ausführungsbeispiel der Mischung 100 kann das Zusatzstoffgemisch 140 wenigstens einen aktiven Zusatzstoff 142 aufweisen, welcher latent hydraulisch und/oder puzzolanisch ist. In diesem Ausführungsbeispiel kann das Zusatzstoffgemisch 140 keine inaktiven Zusatzstoffe 146 aufweisen.

Das in Figur 2 dargestellte zweite Ausführungsbeispiel der Mischung 100 umfasst kalziniertes Aluminiumoxid Al$_2$O$_3$ 143 als aktiven Zusatzstoff 142, welches bezogen auf den Anteil des Zusatzstoffgemischs 140 im Bereich zwischen 1 Gewichts % und 99 Gewichts % vorliegt. Zudem umfasst das Zusatzstoffgemisch 140 natürliche und/oder künstliche Puzzolane 144 als aktiven Zusatzstoff 142, welche bezogen auf den Anteil des Zusatzstoffgemischs 140 im Bereich zwischen 1 Gewichts % und 99 Gewichts % vorliegen. Im dargestellten Ausführungsbeispiel entspricht der aktive Zusatzstoff 142 Meta-Kaolin oder Trass. Es sind auch andere Puzzolane 144, beispielsweise Flugasche und/oder Microsilica und/oder gebrannter Ölschiefer, einsetzbar. Da das Ausführungsbeispiel Aluminiumoxid Al$_2$O$_3$ und natürliche und/oder künstliche Puzzolane 144 aufweist, kann keiner der Anteile 100 Gewichts % des Zusatzstoffgemischs 140 ausmachen. Der Anteil des Aluminiumoxids Al$_2$O$_3$ nimmt mit dem Anteil der natürlichen und/oder künstlichen Puzzolane 144 im Zusatzstoffgemisch 140 ab und umgekehrt.

In einem alternativen nicht dargestellten Ausführungsbeispiel der Mischung 100 kann das Zusatzstoffgemisch 140 entweder Aluminiumoxid $Al_2O_3$ oder natürliche und/oder künstliche Puzzolane 144 als aktiven Zusatzstoff 142 aufweisen. Diese können mit einem Gewichtsanteil von 100 Gewichts % im Zusatzstoffgemisch 140 vorliegen.

Das in Figur 2 dargestellte zweite Ausführungsbeispiel der Mischung 100 und das in Figur 3 dargestellte dritte Ausführungsbeispiel der Mischung 100 umfasst im Zusatzstoffgemisch 140 einen Füller, insbesondere in Form von Quarzmehl 148, als inaktiven Zusatzstoff 146. Der Füller liegt bezogen auf den Anteil des Zusatzstoffgemischs 140 im Bereich zwischen 1 Gewichts % und 99 Gewichts % vor.

In einem alternativen nicht dargestellten Ausführungsbeispiel der Mischung 100 kann der Füller zusätzlich oder alternativ zum Quarzmehl, Kalksteinmehl als inaktiven Zusatzstoff 146 aufweisen.

Zudem ist ein Zusatzstoffgemisch 140 vorstellbar, welches lediglich den Füller umfasst. Dieser kann dann einen Anteil von 100 Gewichts % im Zusatzstoffgemisch 140 ausmachen.

Das in Figur 2 dargestellte zweite Ausführungsbeispiel der Mischung 100 und das in Figur 3 dargestellte dritte Ausführungsbeispiel der Mischung 100 weist im Zusatzstoffgemisch 140 ein organisches und/oder anorganisches Farbpigmentpulver 149 als inaktiven Zusatzstoff 146 auf, insbesondere ein alkalibeständiges Farbpigmentpulver, und/oder wenigstens eine organische und/oder anorganische Farbpigmentsuspension, insbesondere eine alkalibeständige Farbpigmentsuspension.

In einem alternativen nicht dargestellten Ausführungsbeispiel der Mischung 100 sind andere Zusammensetzungen des Zusatzstoffgemischs 140 vorstellbar.

In einem alternativen nicht dargestellten Ausführungsbeispiel der Mischung 100, kann das Zusatzmittelgemisch 120 wenigstens ein Fließmittel und/oder Verflüssiger und/oder Schwindreduzierer aufweisen.

Zusätzlich oder alternativ kann die Zuschlagskörnung 110, dekorative und/oder stabilisierende Elemente, insbesondere Stahlelemente und/oder Fasern und/oder Glimmer aufweisen.

Die Berechnung der Stoffmengen des Zuschlags oder der Zusatzmittel oder der Zusatzstoffe kann über eine Stoffraumrechnung erfolgen.

Die Stoffraumrechnung in der klassischen Betonherstellung ist die rechnerische Ermittlung der Zusammensetzung des Frischbetonvolumens in der Regel für 1 m³ aus dem Volumen der Ausgangsstoffe:

$$1000\,[m^3] = \frac{z\left[\frac{kg}{m^3}\right]}{\rho_z\left[\frac{kg}{dm^3}\right]} + \frac{f\left[\frac{kg}{m^3}\right]}{\rho_f\left[\frac{kg}{dm^3}\right]} + \frac{w\left[\frac{kg}{m^3}\right]}{\rho_w\left[\frac{kg}{dm^3}\right]} + \frac{g\left[\frac{kg}{m^3}\right]}{\rho_g\left[\frac{kg}{dm^3}\right]} + \frac{m\left[\frac{kg}{m^3}\right]}{\rho_m\left[\frac{kg}{dm^3}\right]} + p\left[\frac{dm^3}{m^3}\right]$$

Hierbei ist z der Gehalt des hydraulischen Bindemittels, beispielsweise Zement, dieser Wert ist bei der erfindungsgemäßen Mischung 100 Null. Die Variable f ist der Zusatzstoffgehalt 140 und kann weiter unterteilt werden beispielsweise in aktive und inaktive Anteile, w ist der Wassergehalt 130, g ist der Gehalt der Zuschlagskörnung 110 und kann ebenfalls weiter unterteilt werden, m ist der Zusatzmittelgehalt 120 und kann ebenfalls weiter unterteilt werden und p ist das Porenvolumen. $\rho$ ist die jeweilige Dichte.

Der in Figur 4 dargestellte Körper 200 ist als quaderförmiger Pflasterstein ausgeführt. Der Pflasterstein weist eine rechteckige glatte Oberseite 220 eine rechteckige Unterseite 230, welche in Längsrichtung Rillen 232 aufweist, und vier rechteckige Seitenflächen 210 mit Abstandnocken 212 auf. Der Körper 200 kann im Drycastverfahren, im Hermetikperssverfahren oder im Wetcastverfahren hergestellt sein. Es sind auch viele andere Körper 200 vorstellbar, beispielsweise sind Pflastersteine und Fliesen mit anderen Formen vorstellbar. Zudem können Körper auch keine Rillen 232 und/oder keine Abstandsnocken 212 aufweisen. Zudem ist an der Oberseite 220 oder im Kern eine Bewährung vorstellbar. Des Weiteren sind an der Oberseite 220 Dekorelemente vorstellbar. Es sind auch Skulpturen möglich.

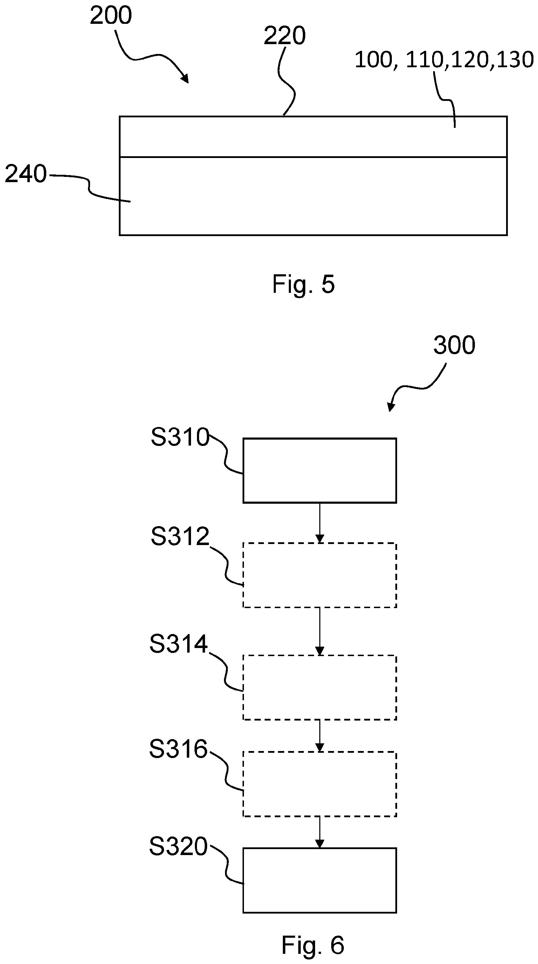

Der in Figur 5 dargestellte erfindungsgemäße Körper 200 ist als Wandbelag und/oder als Bodenbelag und/oder als Deckenbelag und/oder als Vorsatzbeton auf einem Betonelement ausgeführt. Hierbei ist der erfindungsgemäße Körper 200 auf einem geeigneten Untergrund 240 angeordnet.

In einem alternativen nicht dargestellten Ausführungsbeispiel kann erfindungsgemäße Körper 200 auch eine Decke, ein Boden, oder eine Wand sein.

Wie aus Figur 4 und 5 weiter ersichtlich ist, ist der erfindungsgemäße formbeständige zementfrei ausgehärtete Körper 200 aus einer erfindungsgemäßen zementfrei aushärtenden Mischung 100 gebildet, welche eine Zuschlagskörnung 110, ein Zusatzmittelgemisch 120 und Wasser 130 umfasst. In der einfachsten Ausführung besteht die Mischung aus der Zuschlagskörnung 110, dem Zusatzmittelgemisch 120 und Wasser 130. Die Zuschlagskörnung 110 umfasst, wie in den Figuren 1 bis 3, dargestellt ist, einen alkalisch reaktiven Anteil 112 und einen alkalisch nicht reaktiven Anteil 114. Die Zuschlagskörnung liegt 110 in der Mischung 100 mit einem Gewichtsanteil von maximal 90 Gewichts % vor und umfasst zumindest ein recycliertes, anorganisches, körniges Material 111, welches den alkalisch reaktiven Anteil

112 in Form von zerkleinertem, ausgehärtetem Beton aufweist. Das Zusatzmittelgemisch 120 umfasst, wie aus den Figuren 1 bis 3 ersichtlich ist zumindest einen alkalischen Anteil 122, dessen Feststoffanteil in der Mischung 100, mit einem Gewichtsanteil von wenigstens 1,5 Gewichts %, vorliegt.

Der alkalische Anteil 122 umfasst wenigstens ein Alkalisilikat 128, welches reaktives Silizium für Bindungen zur Verfügung stellt, und wenigstens ein Erdalkalimetallhydroxid 124 und/oder wenigstens Alkalimetallhydroxid 126, welche den alkalisch reaktiven Anteil 112 der Zuschlagskörnung 110 mit Erdalkalimetallhydroxiden 124 und/oder Alkalimetallhydroxiden 126 anreichern.

Die möglichen Mischungsverhältnisse der Komponenten der Mischung 100 können wie bereits beschrieben vorliegen, des Weiteren kann die Mischung 100, aus welcher der Körper 200 gebildet ist, weitere bereits beschriebene Komponenten aufweisen. Beispielsweise kann der Körper 200 ein Zusatzstoffgemisch 140 aufweisen. Durch Farbpigmente kann der Körper 200 beispielsweise eine vorgegeben Farbe und/oder ein vorgegebenes Muster aufweisen.

Durch natürliche und/oder künstliche Puzzolane 144 kann der ausgehärtete Körper 200 Verbindungen aus den natürlichen und/oder künstlichen Puzzolanen 144 aufweisen. Des Weiteren kann der Körper 200 eine größere Dichte durch einen Füller aufweisen.

Ein im Drycast-Verfahren hergestellter Körper 200 kann im Zuschlagsgemisch 110 einen alkalisch reaktiven Anteil 112 von wenigstens 10 Gewichts % umfassen.

Ein im Wetcast-Verfahren hergestellter Körper 200 kann im Zuschlagsgemisch 110 einen alkalisch reaktiven Anteil 112 von wenigstens 25 Gewichts % umfassen.

Ein im Gießverfahren hergestellter Körper 200 kann im Zuschlagsgemisch 110 einen alkalisch reaktiven Anteil 112 von wenigstens 25 Gewichts % umfassen.

Zudem kann ein im Wetcastverfahren und ein im Gießverfahren hergestellter Körper zusätzliche Fließmittel aufweisen, welche die Fließfähigkeit der Mischung 100 aus der der Körper 200 gebildet ist, verbessern, ohne zusätzliches Wasser 130 hinzuzugeben.

Ein als Vorsatzschicht und/oder als auf eine andere Oberfläche bzw. auf einen Untergrund 240 aufgetragene Schicht ausgebildeter Körper 200 kann eine Zuschlagskörnung 110 mit Korngrößen zwischen 0,05 mm und 32 mm aufweisen.

Ein in Figur 4 dargestellter, als Vollkörper ausgebildeter Körper 200 kann eine Zuschlagskörnung 110 mit Korngrößen zwischen 0,05 mm und 5 mm aufweisen.

Eine Wand und/oder eine Decke und/oder ein Boden eines Bauwerks kann eine Zuschlagskörnung 110 mit Korngrößen zwischen 0,05 mm und 32 mm aufweisen.

Die Mischung 100, aus welcher der Körper 200 gebildet ist weist einen pH-Wert zwischen 11,5 und 12,6 auf.

Der erfindungsgemäße Körper 200 kann wenigstens eine wasserabweisende bzw. imprägnierte Oberfläche 220, 210, 230 aufweisen. Diese kann durch das Verkieseln der Oberfläche 220, 210, 230 durch klassisches Wasserglas, entstehen. Beispielsweise kann dieser Effekt durch das in die Mischung 100 eigemischte Wasserglas, entstehen, welches nach dem Aushärten der Mischung 100 auch ein nachträgliches Verkieseln bewirkt. Zusätzlich kann zusätzliches Wasserglas oder Silane, Siloxanen auf die entsprechende ausgehärtete Oberfläche 220, 210, 230 aufgetragen werden, um das Verkieseln der entsprechenden Oberfläche 220, 210, 230 zu ermöglichen. Des Weiteren ist das zusätzliche Aufbringen von Epoxidharzen und Acrylaten auf die entsprechende Oberfläche 220, 210, 230 möglich.

Wie aus Figur 6 ersichtlich ist, werden im erfindungsgemäßen Herstellungsverfahren 300 der zementfrei aushärtenden Mischung 100 im Verfahrensschritt S310 eine Zuschlagskörnung 110, ein Zusatzmittelgemisch 120 und Wasser 130 miteinander vermischt.

Wie beim Mischen von Beton wird zuerst die gemischte Zuschlagskörnung 110 oder Komponenten der Zuschlagskörnung 110 in eine geeignete Mischanordnung gegeben. Anschließend werden trockene Pulver, beispielsweise die trockene Zusatzmittel und/oder trockene optionale Zusatzstoffe und/oder pulverförmiger Zuschlag hinzugefügt. Während des Mischens der trockenen Komponenten werden die wässrigen Komponenten, beispielswiese wässrige Zusatzmittel und/oder optionale wässrige Zusatzstoffe und/oder Zugabewasser 133, hinzugefügt, um eine gleichmäßige Mischung 100 zu erhalten.

Die Zuschlagskörnung 110 weist einen alkalisch reaktiven Anteil 112 und einen alkalisch nicht reaktiven Anteil 114 auf, wobei die Zuschlagskörnung 110 in der Mischung 100 mit einem Gewichtsanteil von maximal 90 Gewichts % vorliegt und zumindest ein recycliertes, anorganisches, körniges Material 111 umfasst, welches den alkalisch reaktiven Anteil 112 in Form von zerkleinertem, ausgehärtetem Beton aufweist.

Das Zusatzmittelgemisch 120 umfasst zumindest einen alkalischen Anteil 122, dessen Feststoffanteil in der Mischung 100, mit einem Gewichtsanteil von wenigstens 1,5 Gewichts %, vorliegt.

Der alkalische Anteil 122 umfasst wenigstens ein Alkalisilikat 128, welches reaktives Silizium für Bindungen zur Verfügung stellt, und wenigstens ein Erdalkalimetallhydroxid 124 und/oder wenigstens Alkalimetallhydroxid 126, welche den alkalisch reaktiven Anteil 112 der Zuschlagskörnung 110 mit Erdalkalimetallhydroxiden 124 und/oder Alkalimetallhydroxiden 126 anreichern.

Hierbei reichern das wenigstens ein Erdalkalimetallhydroxid 124 und/oder das wenigstens Alkalimetallhydroxid 126 den alkalisch reaktiven Anteil 112 der Zuschlagskörnung 110 mit ihren negativ geladenen Ionen an. Negativ geladene Hydroxidionen (OH⁻) entstehen, wenn Basen mit Wasser reagieren oder sie binden selbst Wasserstoffionen aus der Dissoziation des Wassers. Der alkalische Anteil 122 der Mischung 100 kann durch diese Basen auf einen gewünschten Wert eingestellt werden. Ältere, stärker carbonatisierte Betone der Zuschlagskörnung 110, mit einem geringeren Basenanteil, können daher höhere Gewichtsanteile an Alkalien 124, 126, 122 für eine ausreichende Anreicherung mit negativ geladenen Ionen benötigen als jüngere weniger carbonatisierte Betone.

In einem alternativen Verfahrensschritt S312 kann die Zuschlagskörnung 110 vor dem Vermischen der Zuschlagskörnung 110 mit anderen Komponenten der Mischung 100 vorbereitet werden. Hierbei können der alkalisch reaktive Anteil 112 und ein alkalisch nicht reaktiver Anteil 114 sowie andere Zuschläge miteinander vermischt werden, wenn diese getrennt vorliegen.

Liegt das recyclierte, anorganische, Material 111 in größeren Stücken vor, können diese durch geeignete nicht dargestellte Verfahren zerkleinert und gesiebt werden.

In einem alternativen Verfahrensschritt S314 kann das Zusatzmittelgemisch 120 vor dem Vermischen mit den anderen Komponenten vorbereitet werden. Hierbei können die alkalischen Anteile 122, beispielsweise durch geeignete Verfahren, gelöst werden. Ein Mischen der alkalischen Anteile 122 miteinander ist sowohl in Lösung als auch im trockenen Zustand möglich. Alternativ können die alkalischen Anteile 122 im geeigneten Zustand der Mischung 100 zugegeben werden, ohne vorher miteinander vermischt zu werden.

Im Verfahrensschritt S320 wird der pH-Wert der Mischung 100 kontrolliert und zwischen 11,5 und 12,6 gehalten.

Der pH-Wert könnte dennoch kurzzeitig über 13 steigen ansteigen, wenn für puzzolanische Reaktionen, der optional zugegebenen Puzzolane, Ionen ($Si_4$+, $Al_3$+) gelöst werden.

Unter Annahme, dass das Alkalisilikat 128 einem Natronwasserglas entspricht, ist folgende Reaktionsgleichung in einer alkalischen Umgebung vorstellbar:

*reakt. Calciumhydroxid + Alkalisilikat → Natronhydroxid + Calziumsilikat*

$$Ca(OH)_2 + Na_2SiO_3 \rightarrow 2NaOH + CaSiO_3$$

In diesem Beispiel würde die Bildung von Calciumsilikat ($CaSiO_3$) zu neuen Bindungen in der erfindungsgemäßen Mischung 100 führen. Das zusätzlich entstandene Natronhydroxid ist wasserlöslich und steht somit wieder für neue, chemische Reaktionen und/oder Prozesse zur Verfügung, insbesondere als Nukleophil, einem Reaktionspartner, welcher ein Elektronenpaar für die neu zu bildenden Bindungen liefert.

Für weitere mögliche Bindungen, welche zur Aushärtung der erfindungsgemäßen Mischung 100 beitragen können, kann die Mischung 100 an ihrer ausgehärteten Oberfläche 210, 220, 230 in vorteilhafter Weise Kohlenstoffdioxid (COz) aus der Umgebungsluft durch enthaltene bzw. noch vorhandene und/oder restliche Calciumhydroxide ($Ca(OH)_2$) aus der Zuschlagskörnung 110 binden.

Zusätzlich kann kohlenstoffdioxidhaltige Umgebungsluft durch Mischprozesse in die Mischung 100 bzw. in das recyclierten anorganischen Material 111 eingehen, und das Kohlenstoffdioxid ($CO_2$) kann durch die enthaltenen Calciumhydroxide ($Ca(OH)_2$) aus der Zuschlagskörnung 110 gebunden werden. Hierbei verbindet sich das Kohlenstoffdioxid ($CO_2$) aus der Umgebungsluft bzw. aus der Luft im Gemisch mit dem überschüssigen Calciumhydroxid ($Ca(OH)_2$). Hierbei bildet sich Calciumcarbonat ($CaCo_3$). Dadurch wird die Oberfläche 210, 220, 230 der Mischung 100 bzw. die Oberfläche 210, 220, 230 des durch die Mischung 100 gebildeten Körpers 200 noch dichter und wasserabweisender. Kohlenstoffdioxid ($CO_2$) wird hierbei zusätzlich gespeichert.

Folgende Reaktionsgleichung ist vorstellbar:

*reakt. Calciumhydroxid + Kohlenstoffdioxid →* Calciumcarbonat + *Wasser*

$$Ca(OH)_2 + CO_2 \rightarrow CaCO_3 + H_2O$$

Steht zudem zusätzlich Kalisilikat zur Verfügung, bildet sich mit dem Calciumhydroxid ein Calciumsilikat und ein Alkalicarbonat.

Folgende Reaktionsgleichung ist vorstellbar:

*reakt. Calciumhydroxid + Kaliwasserglas + Kohlenstoffdioxid →* Calciumsilikat + Kaliumcarbonat

$$Ca(OH)_2 + K_2SiO_3 + CO_2 \rightarrow CaSiO_3 + K_2CO_3$$

Das Calciumsilikat trägt hierbei zu den Bindungen in der Mischung 100 bei. Das Kaliumcarbonat liegt als wasserlösliche Pottasche vor und kann bei Bedarf abgewaschen werden.

Das Alkalisilikat $Na_2SiO_3$ kann aufgrund seiner dauerhaften Wasserbeständigkeit für die Zuschlagskörnung 110 in vorteilhafter Weise ein zusätzliches Klebemittel sein, welches das verkleben der alkalisch nicht reaktiven Anteile 114 unterstützen kann.

Weitere Zuschläge können mit sich bildenden Siliziumoxid-Gel gebunden werden.

Folgende Reaktionsgleichung ist vorstellbar:

$$Kaliwasserglas + Kohlenstoffdioxid \rightarrow Siliziumoxid + Kalicarbonat$$

$$K_2SiO_3 + CO_2 \rightarrow SiO_2 + CO_3$$

Die dargestellten und beschriebenen Reaktionsgleichungen sind so zu verstehen, dass diese nicht hintereinander bzw. in einer bestimmten Reihenfolge oder nur für sich stattfinden. Vielmehr können mehrere Reaktionen untereinander und/oder zeitgleich stattfinden.

In einem alternativen Verfahrensschritt S316 wird zusätzlich zur Zuschlagskörnung 110, dem Zusatzmittelgemisch 120 und Wasser 130 ein Zusatzstoffgemisch 140 eingegeben. Das Zusatzstoffgemisch 140 kann feste und/oder flüssige Zusatzstoffe aufweisen. Die Reihenfolge in welcher diese Zusatzstoffe der Mischung 100 zugefügt werden, hängt wie bereits beschrieben von ihrer Konsistenz ab. In einem alternativen nicht dargestellten Verfahrensschritt können mehrere Zusatzstoffe des Zusatzstoffgemischs 140 auch miteinander vermischt werden, bevor diese der Mischung 100 zugefügt werden.

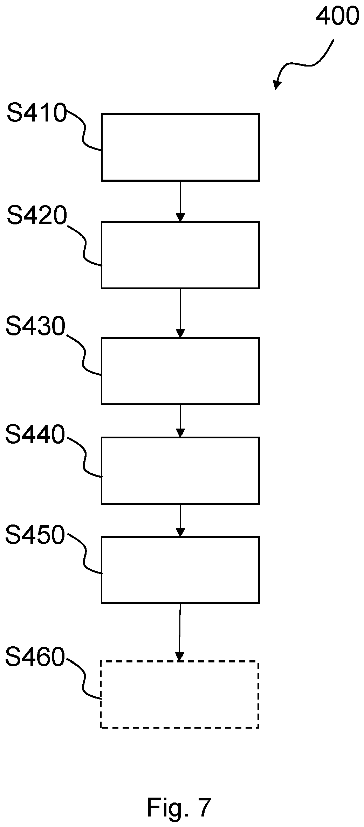

Wie aus Figur 7 ersichtlich ist, wird im erfindungsgemäßen Herstellungsverfahren 400 des formbeständigen zementfrei ausgehärteten Körpers 200 im Verfahrensschritt S410 wenigstens eine Mischung 100 hergestellt. Es können bei Bedarf im Verfahrensschritt S410 auch mehrere Mischungen 100 hergestellte werden.

Zum Herstellen der Mischung 100 bzw. der Mischungen 100 werden eine Zuschlagskörnung 110, ein Zusatzmittelgemisch 120 und Wasser 130 miteinander vermischt. Die Zuschlagskörnung 110 umfasst einen alkalisch reaktiven Anteil 112 und einen alkalisch nicht reaktiven Anteil 114. Die Zuschlagskörnung 110 in der Mischung 100 liegt mit einem Gewichtsanteil von maximal 90 Gewichts % vor und umfasst zumindest ein recycliertes, anorganisches, körniges Material 111, welches den alkalisch reaktiven Anteil 112 in Form von zerkleinertem, ausgehärtetem Beton aufweist. Das Zusatzmittelgemisch 120 umfasst zumindest einen alkalischen Anteil 122, dessen Feststoffanteil in der Mischung 100, mit einem Gewichtsanteil von wenigstens 1,5 Gewichts %, vorliegt.

Der alkalische Anteil 122 umfasst wenigstens ein Alkalisilikat 128, welches reaktives Silizium für Bindungen zur Verfügung stellt, und wenigstens ein Erdalkalimetallhydroxid 124 und/oder wenigstens Alkalimetallhydroxid 126, welche den alkalisch reaktiven Anteil 112 der Zuschlagskörnung 110 mit Erdalkalimetallhydroxiden 124 und/oder Alkalimetallhydroxiden 126 anreichern.

Weitere Details zum Herstellen der Mischung 100 sind in der Figur 6 beschrieben und werden an dieser Stelle nicht wiederholt.

Mehrere Mischungen 100 können sich in der Konsistenz und/oder in Korngröße der Zuschlagskörnung 110 oder durch zusätzliche dekorative und/oder stabilisierende Elemente und in der Zusammensetzung der Komponenten voneinander unterscheiden. Beispielsweise kann eine Vorsatzbetonmischung kleinere Korngrößen als eine Kernbetonmischung aufweisen.

Im Verfahrensschritt S420 wird der pH-Wert der Mischung 100 kontrolliert und zwischen 11,5 und 12,6 gehalten.

Der pH-Wert könnte dennoch kurzzeitig über 13 steigen ansteigen, wenn für puzzolanische Reaktionen, der optional zugegebenen Puzzolane, Ionen ($Si_4+$, $Al_3+$) gelöst werden.

Im Verfahrensschritt S430 wird die Mischung 100 auf eine Oberfläche oder auf einen Untergrund 240 aufgetragen und/oder in eine Form gegeben.

Wird ein Körper 200 mit wenigstens einer Vorsatzschicht und einem Kernbeton hergestellt, können die entsprechenden Mischungen im Verfahrensschritt S430 nacheinander in die Form eingefüllt werden. Oder Schichtweise übereinander aufgetragen werden.

In einem alternativen nicht dargestellten Ausführungsbeispiel kann die Form zuvor mit einem Trennmittel bearbeitet werden.

Im Verfahrensschritt S440 wird die Mischung 100 mittels Vibration und/oder Rütteln und/oder Schütteln und/oder mittels Stempeln verdichtet.

Im Verfahrensschritt S450 wird die in Form gebrachte Mischung 100 und/oder die auf eine Untergrund 240 aufgetragene Mischung 100 unter Lufteinfluss ausgehärtet.

Bei einer selbstverdichtend aushärtenden Mischung kann auf den Verfahrensschritt S440 verzichtet werden.

Zum Herstellen des Körpers 200 mittels einer Form ist neben dem Drycastverfahren, in welchem mehrere Mischungen 100 in etwa die gleiche Konsistenz aufweisen, auch ein Hermetikverfahren denkbar, in welchem eine Mischung 100 flüssig und eine Mischung 100 erdfeucht in einen hermetisch dicht mit einer Unterfläche abgedichtet Formrahmen eingeben werden. Zudem ist ein Wetcastverfahren vorstellbar, in welchem die Mischung 100 flüssig ist, vorstellbar.

Im alternativen Verfahrensschritt S460 wird ein zusätzliches Wasserglas oder Silane, Siloxane auf eine ausgehärtete Oberfläche 220, 210, 230 des Körpers 200 aufgetragen, um das Verkieseln der entsprechenden Oberfläche 220, 210, 230 zu ermöglichen. Des Weiteren ist das zusätzliche Aufbringen von Epoxidharzen und Acrylaten auf die entsprechende Oberfläche 220, 210, 230 möglich.

**Bezugzeichenliste**

| | |
|---|---|
| 100 | Mischung |
| 110 | Zuschlagskörnung |
| 111 | recycliertes, anorganisches, körniges Material |
| 112 | alkalisch reaktiver Anteil |
| 114 | alkalisch nicht reaktiver Anteil |
| 120 | Zusatzmittelgemisch |
| 122 | alkalischen Anteil |
| 124 | Erdalkalimetallhydroxid |
| 126 | Alkalimetallhydroxid |
| 128 | Alkalisilikat |
| 130 | Wasser |
| 131 | Eigenfeuchte der Zuschlagskörnung |
| 132 | Lösungswasser |
| 133 | Zugabewasser |
| 140 | Zusatzstoffgemisch |
| 142 | aktiver Zusatzstoff |
| 143 | kalziniertes Aluminiumoxid $Al_2O_3$ |
| 144 | natürliche/künstliche Puzzolane |
| 146 | inaktiver Zusatzstoff |
| 148 | Quarzmehl |
| 149 | Farbpigmentpulver |
| 200 | Körper |
| 210 | Seitenfläche |
| 212 | Abstandsnocken |
| 220 | Oberseite |
| 230 | Unterseite |
| 232 | Rillen |
| 240 | Untergrund |
| 300 | Verfahren zur Herstellung der Mischung |
| S310-S320 | Verfahrensschritte |
| 400 | Verfahren zur Herstellung des Körpers |
| S410-S460 | Verfahrensschritte |

**Patentansprüche**

**1.** Zementfrei aushärtende Mischung (100) welche eine Zuschlagskörnung (110), ein Zusatzmittelgemisch (120) und Wasser (130) umfasst,

wobei die Zuschlagskörnung (110) einen alkalisch reaktiven Anteil (112) und einen alkalisch nicht reaktiven Anteil (114) umfasst,
wobei die Zuschlagskörnung (110) in der Mischung (100) mit einem Gewichtsanteil von maximal 90 Gewichts % vorliegt und zumindest ein recycliertes, anorganisches, körniges Material (111) umfasst, welches den alkalisch reaktiven Anteil (112) in Form von zerkleinertem, ausgehärtetem Beton aufweist,
wobei das Zusatzmittelgemisch (120) zumindest einen alkalischen Anteil (122) umfasst, dessen Feststoffanteil in der Mischung (100) mit einem Gewichtsanteil von wenigstens 1,5 Gewichts % vorliegt,
wobei der alkalische Anteil (122) wenigstens ein Alkalisilikat (128) umfasst, welches reaktives Silizium für Bindungen zur Verfügung stellt,
und wenigstens ein Erdalkalimetallhydroxid (124) und/oder wenigstens Alkalimetallhydroxid (126) umfasst, welche den alkalisch reaktiven Anteil (112) der Zuschlagskörnung (110) mit Erdalkalimetallhydroxiden (124) und/oder Alkalimetallhydroxiden (126) anreichern.

2. Mischung nach Anspruch 1, wobei die Mischung (100) einen pH-Wert zwischen 11,5 und 12,6 aufweist.

3. Mischung nach Anspruch 1 oder 2, wobei der alkalisch reaktive Anteil (112) der Zuschlagskörnung (110) in Form von zerkleinertem, ausgehärtetem Beton wenigstens 10 Gewichts % der Mischung (100) ausmacht und/oder wobei der alkalisch reaktive Anteil (112) der Zuschlagskörnung (110) in Form von zerkleinertem, ausgehärtetem Beton wenigstens 99 Gewichts % der Zuschlagskörnung (110) ausmacht.

4. Mischung nach einem der vorhergehenden Ansprüche, wobei die Anteile (112, 114) der Zuschlagskörnung (110) Korngrößen zwischen 0,05 mm und 32 mm, insbesondere zwischen 0,05 mm und 16 mm, aufweisen.

5. Mischung nach einem der vorhergehenden Ansprüche, wobei das Wasser (130) in Form von Eigenfeuchte (131) der Zuschlagskörnung (110) und/oder als Lösungswasser (132) im Zusatzmittelgemisch (120) und/oder als Zugabewasser (133) vorliegt und in der Mischung (100) mit einem Gewichtsanteil zwischen 3 Gewichts % und 40 Gewichts % vorliegt.

6. Mischung nach einem der vorhergehenden Ansprüche, mit einem Zusatzstoffgemisch (140), welches in der Mischung (100) mit einem Gewichtsanteil von maximal 40 Gewichts % vorliegt und welches wenigstens einen inaktiven Zusatzstoff (146) und/oder welches wenigstens einen aktiven Zusatzstoff (142) umfasst, welcher latent hydraulisch und/oder puzzolanisch ist.

7. Mischung nach Anspruch 6, wobei das Zusatzstoffgemisch (140) einen Füller, insbesondere in Form von Quarzmehl (148) und/oder Kalksteinmehl, als inaktiven Zusatzstoff (146) umfasst, welcher bezogen auf den Anteil des Zusatzstoffgemischs (140) im Bereich zwischen 1 Gewichts % und 100 Gewichts % vorliegt; und/oder

wobei das Zusatzstoffgemisch (140) ein organisches und/oder anorganisches Farbpigmentpulver (149), insbesondere ein alkalibeständiges Farbpigmentpulver, und/oder wenigstens eine organische und/oder anorganische Farbpigmentsuspension, insbesondere eine alkalibeständige Farbpigmentsuspension, als inaktiven Zusatzstoff (146) umfasst; und/oder
wobei das Zusatzstoffgemisch (140) kalziniertes Aluminiumoxid $Al_2O_3$ (143) als aktiven Zusatzstoff (142) umfasst, welcher bezogen auf den Anteil des Zusatzstoffgemischs (140) im Bereich zwischen 1 Gewichts % und 100 Gewichts % vorliegt, und/oder
wobei das Zusatzstoffgemisch (140) natürliche und/oder künstliche Puzzolane (144) als aktiven Zusatzstoff (142) umfasst, welche bezogen auf den Anteil des Zusatzstoffgemischs (140) im Bereich zwischen 1 Gewichts % und 100 Gewichts % vorliegen.

8. Mischung nach einem der vorhergehenden Ansprüche, wobei das Zusatzmittelgemisch (120) wenigstens ein Fließmittel und/oder Verflüssiger und/oder Schwindreduzierer aufweist.

9. Mischung nach einem der vorhergehenden Ansprüche, wobei das Zuschlagsgemisch (110) dekorative Elemente und/oder stabilisierende Elemente, insbesondere Stahlelemente und/oder Fasern und/oder Glimmer, aufweist.

10. Formbeständiger, zementfrei ausgehärteter Körper (200), der aus einer zementfrei aushärtenden Mischung (100) nach einem der vorhergehenden Ansprüche gebildet ist, welche eine Zuschlagskörnung (110), ein Zusatzmittelgemisch (120) und Wasser (130) umfasst,

wobei die Zuschlagskörnung (110) einen alkalisch reaktiven Anteil (112) und einen alkalisch nicht reaktiven Anteil (114) umfasst,
wobei die Zuschlagskörnung (110) in der Mischung (100) mit einem Gewichtsanteil von maximal 90 Gewichts % vorliegt und zumindest ein recycliertes, anorganisches, körniges Material (111) umfasst, welches den alkalisch reaktiven Anteil (112) in Form von zerkleinertem, ausgehärtetem Beton aufweist,
wobei das Zusatzmittelgemisch (120) zumindest einen alkalischen Anteil (122) umfasst, dessen Feststoffanteil in der Mischung (100), mit einem Gewichtsanteil von wenigstens 1,5 Gewichts %, vorliegt,
wobei der alkalische Anteil (122) wenigstens ein Alkalisilikat (128) umfasst, welches reaktives Silizium für Bindungen zur Verfügung stellt,
und wenigstens ein Erdalkalimetallhydroxid (124) und/oder wenigstens Alkalimetallhydroxid (126) umfasst, welche den alkalisch reaktiven Anteil (112) der Zuschlagskörnung (110) mit Erdalkalimetallhydroxiden (124) und/oder Alkalimetallhydroxiden (126) anreichern.

11. Körper nach Anspruch 10, wobei

ein im Drycast-Verfahren hergestellter Körper (200) im Zuschlagsgemisch (110) einen alkalisch reaktiven Anteil (112) von wenigstens 10 Gewichts % umfasst,
ein im Wetcast-Verfahren hergestellter Körper (200) im Zuschlagsgemisch (110) einen alkalisch reaktiven Anteil (112) von wenigstens 25 Gewichts % umfasst,
ein im Gießverfahren hergestellter Körper (200) im Zuschlagsgemisch (110) einen alkalisch reaktiven Anteil (112) von wenigstens 25 Gewichts % umfasst.

12. Körper nach Anspruch 10 oder 11, wobei

ein als Vorsatzschicht und/oder als auf eine andere Oberfläche (240) aufgetragene Schicht ausgebildeter Körper (200) eine Zuschlagskörnung (110) mit Korngrößen zwischen 0,05 mm und 32 mm, insbesondere zwischen 0,05 mm und 16 mm aufweist und/oder
wobei ein als Vollkörper ausgebildeter Körper (200) eine Zuschlagskörnung (110) mit Korngrößen zwischen 0,05 mm und 5 mm aufweist.

13. Verfahren (300) zum Herstellen einer zementfrei aushärtenden Mischung (100) nach einem der Ansprüche 1 bis 9, wobei eine Zuschlagskörnung (110), ein Zusatzmittelgemisch (120) und Wasser (130) miteinander vermischt werden,

wobei die Zuschlagskörnung (110) einen alkalisch reaktiven Anteil (112) und einen alkalisch nicht reaktiven Anteil (114) umfasst,
wobei die Zuschlagskörnung (110) in der Mischung (100) mit einem Gewichtsanteil von maximal 90 Gewichts % vorliegt und zumindest ein recycliertes, anorganisches, körniges Material (111) umfasst, welches den alkalisch reaktiven Anteil (112) in Form von zerkleinerten, ausgehärteten Beton aufweist,
wobei das Zusatzmittelgemisch (120) zumindest einen alkalischen Anteil (122) umfasst, dessen Feststoffanteil in der Mischung (100), mit einem Gewichtsanteil von wenigstens 1,5 Gewichts %, vorliegt,
wobei der alkalische Anteil (122) wenigstens ein Alkalisilikat (128) umfasst, welches reaktives Silizium für Bindungen zur Verfügung stellt,
und wenigstens ein Erdalkalimetallhydroxid (124) und/oder wenigstens Alkalimetallhydroxid (126) umfasst, welche den alkalisch reaktiven Anteil (112) der Zuschlagskörnung (110) mit Erdalkalimetallhydroxiden (124) und/oder Alkalimetallhydroxiden (126) anreichern.

14. Verfahren nach Anspruch 13, wobei der pH-Wert zwischen 11,5 und 12,6 gehalten wird.

15. Verfahren nach Anspruch 13 oder 14, wobei zusätzlich zur Zuschlagskörnung (110) dem Zusatzmittelgemisch (120) und Wasser (130) ein Zusatzstoffgemisch (140) eingegeben wird.

16. Verfahren (400) zum Herstellen eines formbeständigen, zementfrei ausgehärteten Körpers (200) nach einem der Ansprüche 10 bis 12, wobei der Körper aus einer zementfrei ausgehärteten Mischung (100) nach einem der Ansprüche 1 bis 9 gebildet wird, wobei Komponenten der Mischung (100) miteinander vermischt werden, wobei die Mischung (100) eine Zuschlagskörnung (110), ein Zusatzmittelgemisch (120) und Wasser (130) umfasst,

wobei die Zuschlagskörnung (110) einen alkalisch reaktiven Anteil (112) und einen alkalisch nicht reaktiven Anteil (114) umfasst,
wobei die Zuschlagskörnung (110) in der Mischung (100) mit einem Gewichtsanteil von maximal 90 Gewichts % vorliegt und zumindest ein recycliertes, anorganisches, körniges Material (111) umfasst, welches den alkalisch reaktiven Anteil (112)in Form von zerkleinertem, ausgehärtetem Beton aufweist,
wobei das Zusatzmittelgemisch (120) zumindest einen alkalischen Anteil (122) umfasst, dessen Feststoffanteil in der Mischung (100), mit einem Gewichtsanteil von wenigstens 1,5 Gewichts %, vorliegt,

wobei der alkalische Anteil (122) wenigstens ein Alkalisilikat (128) umfasst, welches reaktives Silizium für Bindungen zur Verfügung stellt, und wenigstens ein Erdalkalimetallhydroxid (124) und/oder wenigstens Alkalimetallhydroxid (126) umfasst, welche den alkalisch reaktiven Anteil (112) der Zuschlagskörnung (110) mit Erdalkalimetallhydroxiden (124) und/oder Alkalimetallhydroxiden (126) anreichern.

17. Verfahren nach Anspruch 16, wobei der pH-Wert der Mischung (100) zwischen 11,5 und 12,6 gehalten wird.

18. Verfahren nach einem der Ansprüche 16 oder 17, wobei die Mischung (100) mittels Vibration und/oder Rütteln und/oder Schütteln und/oder mittels Stempeln verdichtet und anschließend ausgehärtet wird und/oder wobei die Mischung (100) selbstverdichtend oder unter Lufteinfluss aushärtet.

Fig. 1

Fig. 2

Fig. 3

Fig. 4

200

220

100, 110,120,130

240

Fig. 5

300

S310

S312

S314

S316

S320

Fig. 6

Fig. 7

| Europäisches Patentamt / European Patent Office / Office européen des brevets | **EUROPÄISCHER RECHERCHENBERICHT** | Nummer der Anmeldung<br>EP 23 21 7750 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/078349 A1 (UNIV FUER CHEMIE UND TECHNOLOG [CZ]; SKVARA FRANTISEK [CZ] ET AL.) 25. September 2003 (2003-09-25)<br>* Beispiel 4 *<br>* Anspruch 1 *<br>- - - - - | 1-5,10, 12-14, 16,17 | INV.<br>C04B28/00<br><br>ADD.<br>C04B111/10 |
| X | WO 2021/181092 A1 (UNIV LIVERPOOL JOHN MOORES [GB]) 16. September 2021 (2021-09-16)<br><br>* Seite 16 - Seite 19; Beispiele 1, CF70; Tabelle 3 *<br>- - - - - | 1-3,5-7, 10,11, 13,14, 16-18 | |
| X | CN 107 265 892 A (UNIV SOUTHEAST) 20. Oktober 2017 (2017-10-20)<br>* Ansprüche 1-6 *<br>- - - - - | 1-7,10, 13,14 | |
| X | CN 107 226 643 A (UNIV WUHAN TECH) 3. Oktober 2017 (2017-10-03)<br>* Ansprüche 1-8 *<br>- - - - - | 1-8, 10-18 | RECHERCHIERTE SACHGEBIETE (IPC) |
| X | CN 105 948 596 A (GUANGDONG HUIZHONG NEW MAT TECH CO LTD ET AL.) 21. September 2016 (2016-09-21)<br>* Ansprüche 1-10 *<br>- - - - - | 1-8, 10-15 | C04B |
| X | CN 114 751 768 A (ZHEJIANG TIANZAO ENVIRONMENTAL PROTECTION TECH CO LTD) 15. Juli 2022 (2022-07-15)<br>* Ansprüche 1-10 *<br>- - - - - | 1,9 | |
| X | CN 114 538 831 A (CHINESE AND WESTERN BUILDING STOCK LTD COMPANY) 27. Mai 2022 (2022-05-27)<br>* Ansprüche 1-9 *<br>- - - - -<br><br>-/-- | 1,9 | |

Der vorliegende Recherchenbericht wurde für alle Patentansprüche erstellt

| Recherchenort | Abschlußdatum der Recherche | Prüfer |
|---|---|---|
| Den Haag | 17. Juni 2024 | Kolb, Ulrike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung

EP 23 21 7750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 111 205 021 A (UNIV SICHUAN) 29. Mai 2020 (2020-05-29) * Ansprüche 1-6 * ----- | 1 | |
| X | CN 115 259 757 A (UNIV SOUTHEAST) 1. November 2022 (2022-11-01) * Ansprüche 1-7 * ----- | 1 | |
| X | CN 113 716 898 A (UNIV SOUTHEAST) 30. November 2021 (2021-11-30) * Ansprüche 1-7 * ----- | 1 | |
| X | CN 113 213 826 A (NANTONG YONGCHENG HUIHAI CONSTRUCTION ENG CO LTD ET AL.) 6. August 2021 (2021-08-06) * Ansprüche 1-7 * ----- | 1 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 17. Juni 2024 | Kolb, Ulrike |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 21 7750

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-06-2024

| Im Recherchenbericht angeführtes Patentdokument | Datum der Veröffentlichung | Mitglied(er) der Patentfamilie | Datum der Veröffentlichung |
|---|---|---|---|
| WO 03078349 A1 | 25-09-2003 | AU 2003213989 A1<br>CZ 20021011 A3<br>SK 332004 A3<br>WO 03078349 A1 | 29-09-2003<br>17-12-2003<br>03-08-2004<br>25-09-2003 |
| WO 2021181092 A1 | 16-09-2021 | EP 4118050 A1<br>GB 2592954 A<br>WO 2021181092 A1 | 18-01-2023<br>15-09-2021<br>16-09-2021 |
| CN 107265892 A | 20-10-2017 | KEINE | |
| CN 107226643 A | 03-10-2017 | KEINE | |
| CN 105948596 A | 21-09-2016 | KEINE | |
| CN 114751768 A | 15-07-2022 | KEINE | |
| CN 114538831 A | 27-05-2022 | KEINE | |
| CN 111205021 A | 29-05-2020 | KEINE | |
| CN 115259757 A | 01-11-2022 | KEINE | |
| CN 113716898 A | 30-11-2021 | KEINE | |
| CN 113213826 A | 06-08-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010027325 A1
- WO 002003078349 A1